(19) Europäisches Patentamt
European Patent Office
Office européen des brevets

(11) EP 4 527 899 A1

(12) EUROPEAN PATENT APPLICATION

(43) Date of publication:
**26.03.2025 Bulletin 2025/13**

(21) Application number: **23199234.8**

(22) Date of filing: **22.09.2023**

(51) International Patent Classification (IPC):
***C09D 5/02** (2006.01)* ***C09D 5/14** (2006.01)*
***C09D 7/63** (2018.01)*

(52) Cooperative Patent Classification (CPC):
**C09D 5/025; C09D 5/14; C09D 7/63;** C08K 5/053

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Jotun A/S**
**3202 Sandefjord (NO)**

(72) Inventors:
- **FLENSTAD, Siri**
**3209 Sandefjord (NO)**
- **AASUM, Inger Helene**
**3209 Sandefjord (NO)**
- **JENSEN, Hanne**
**3209 Sandefjord (NO)**
- **KAMISINSKA, Agnieszka**
**3209 Sandefjord (NO)**

(74) Representative: **Marks & Clerk LLP**
**15 Fetter Lane**
**London EC4A 1BW (GB)**

(54) **COMPOSITION**

(57) The present invention relates to an aqueous composition comprising:
(i) binder, preferably an organic binder;
(ii) >0.1 wt% $C_{5-9}$ acyclic, vicinal diol; and
(iii) water,
wherein said composition has a pH of >7.0 and said wt% is based on the total weight of the composition.

EP 4 527 899 A1

## Description

### INTRODUCTION

The present invention relates to aqueous compositions, and in particular aqueous coating compositions, comprising binder, $C_{5-9}$ acyclic, vicinal diol, and water, and having a pH of greater than 7.0, which are resistant to microbial (e.g. bacterial) attack. The invention also relates to a method for making the aqueous composition, and to a container containing the aqueous composition. Moreover, the invention relates to the use of a $C_{5-9}$ acyclic, vicinal diol as an agent to improve the microbial resistance in an aqueous composition, and to use of the aqueous composition to form a coating on a substrate. A method of coating a substrate using the aqueous composition also forms part of the invention, as does the resulting coated substrate.

### BACKGROUND

There is a drive in the paint industry from regulatory authorities and consumers to produce waterborne products to replace more conventional solventborne products (e.g. paints, coating compositions) to reduce volatile organic compounds (VOCs). Unlike solventborne compositions, aqueous compositions are prone to microbial attack in the wet state as the environment is suitable for survival and growth of microorganisms.

Active substances, often referred to as wet-state preservatives, are used in waterborne products such as aqueous compositions to provide microbial protection whilst the product is prepared and stored in its packaging. Without preservatives aqueous compositions will experience uncontrolled microbial growth resulting in spoilage of the product. However, both the number of, and the use concentrations of, preservatives need to be lowered to comply with different biocide regulations introduced globally. The European Biocide Regulation is today the most stringent and restrictive biocide regulation in place. Conventionally used preservatives, such as the isothiazolinones (e.g. MIT and CIT), may be restricted in the future due to their skin sensitizing properties. Isothiazolinones have been used in the paint industry since the 1980s, and they are very effective both for wet-state and dry-film preservation. In recent years, a strong increase in allergic contact dermatitis has been observed resulting from the use of personal care products containing isothiazolinones.

Different Ecolabels have specific criteria and limitations for the use of sensitizing preservatives in paints. In general, Ecolabels do not allow paint that is classified as skin sensitizing (H317, contains isothiazolinones above their Specific Concentration Limit (SCL)). Most of the isothiazolinones are not effective below the SCL. Thus, there is a need for alternative preservation techniques.

Nevertheless, it is of course important that the aqueous composition is storage stable for a long time as products are produced, stored, distributed to shops, optionally tinted and finally bought by the end consumer. For the end consumer it is a significant benefit if the product can be stored for a long time and used again. For do-it-yourself (DIY) customers it is common practice to use products several times with storage in between uses.

High pH paint has been suggested as a solution to make preservative free paint. Bacteria are the predominant microorganisms in spoiled paint. It is known that the majority of bacteria prefer a pH of 7-10. Increasing the pH therefore creates an environment which is less suitable for microorganisms.

It has been found that high pH paint is not sufficient to provide aqueous compositions that are storage stable for a long time, and that can handle exposure to microorganisms. Preservative free high pH paint spoils easily when exposed to bacteria. Moreover, to ensure that preservative free paints with high pH are free of bacteria when placed on the market, the exposure to microorganisms in the production facilities must be minimized. This sets very high requirements for the production hygiene, specifically similar to the food industry. Furthermore, the raw materials used in the product must be free of bacteria. This is challenging as the raw materials cannot contain preservatives which makes them more susceptible to microbial attack. In addition, only a minor part of the raw materials are available without preservatives. Furthermore, high pH may give stability issues for both raw materials and the final composition.

Furthermore, compositions with high pH will be classified as corrosive. According to European CLP (The European Commission, Regulation (EC) No 1272/2008 on classification, labelling and packaging of substances and mixtures 2008) a composition with pH >11.5 is classified as corrosive. The safe handling for consumers to use such paints is questionable as splash can lead to corrosive damage, which is irreversible, especially for eyes.

### SUMMARY OF THE INVENTION

Viewed from a first aspect, the present invention provides an aqueous composition comprising:

(i) binder
(ii) >0.1 wt% $C_{5-9}$ acyclic, vicinal diol; and
(iii) water,

wherein said composition has a pH of >7.0 and said wt% is based on the total weight of the composition.

Viewed from a further aspect, the present invention provides a method for making an aqueous composition as hereinbefore defined, comprising mixing binder, >0.1 wt% $C_{5-9}$ acyclic, vicinal diol and water.

Viewed from a further aspect, the present invention provides a container containing the aqueous composition as hereinbefore defined.

Viewed from a further aspect, the present invention provides the use of a $C_{5-9}$ acyclic, vicinal diol as an agent to improve the microbial resistancein an aqueous composition comprising a binder, wherein said $C_{5-9}$ acyclic, vicinal diol has a concentration of >0.1 wt%, based on the total weight of the composition, and said composition has a pH of >7.0.

Viewed from a further aspect, the present invention provides the use of an aqueous composition as hereinbefore defined to form a coating on a substrate.

Viewed from a further aspect, the present invention provides a method of coating a substrate comprising:

(i) applying an aqueous composition as hereinbefore defined to at least one surface of the substrate; and
(ii) drying and/or curing said composition to form said coating.

Viewed from a further aspect, the present invention provides a coating on a substrate, wherein said coating is formed from an aqueous composition as hereinbefore defined.

Viewed from a further aspect, the present invention provides a coated substrate, wherein said coating is formed from an aqueous composition as hereinbefore defined.

DEFINITIONS

As used herein, the term "aqueous composition" refers to a composition wherein the continuous phase is water. Depending on the nature of the binder, the aqueous composition may comprise polymer particles or droplets dispersed therein.

As used herein, the term "dispersion" refers to a dispersion of particles or droplets dispersed in a continuous aqueous liquid phase. Typically, the continuous liquid phase is water. Droplets dispersed in water can be referred to as an emulsion. In the present invention the term "dispersion" refers to both particles and droplets (emulsions) dispersed in water.

As used herein, the term "coating composition" refers to a composition that, when applied to a surface, forms a film or coating thereon.

As used herein, the term "one component coating composition" refers to a coating composition which, aside from the optional addition of tinters, is in ready to use or apply form. Optionally, tinters may be added to such compositions. Generally, however, such compositions do not require any additional ingredients to be added, at the point of application. Optionally water and/or solvent may be added prior to application.

As used herein, the term "acyclic" refers to non-cyclic groups. Hence a $C_{5-9}$ acyclic diol is a $C_{5-9}$ non-cyclic diol.

As used herein, the term "vicinal diol" refers to a compound wherein two hydroxyl groups occupy vicinal positions, i.e. they are attached to adjacent carbon atoms. Vicinal diols are different to geminal diols, wherein two hydroxyl groups are attached to the same carbon atom.

As used herein, the term poly (meth)acrylic refers to a polymer comprising repeat units derived from (meth)acrylic monomers. This encompasses (meth)acrylate monomers. Generally, a poly(meth)acrylic will comprise at least 50 wt% repeat units derived from (meth)acrylic monomers, based on the dry weight of the polymer, i.e. acrylic, methacrylic, acrylate and/or methacrylate monomers. Generally, a poly(meth)acrylic will comprise less than 10 wt% repeat units derived from styrene monomers, based on the dry weight of the polymer. Generally, a poly(meth)acrylic will comprise less than 10 wt% repeat units derived from vinyl acetate monomers, based on the dry weight of the polymer.

As used herein, the term poly styrene (meth)acrylic refers to a polymer comprising repeat units derived from styrene monomers and (meth)acrylic monomers. The latter encompasses (meth)acrylate monomers. Generally a poly styrene (meth)acrylic will comprise at least 10 wt% repeat units derived from styrene monomers, based on the dry weight of the polymer. Generally a poly styrene (meth)acrylic will comprise at least 50 wt% repeat units derived from (meth)acrylic monomers, i.e. acrylic, methacrylic, acrylate and/or methacrylate monomers, based on the dry weight of the polymer. Generally, a poly styrene (meth)acrylic will comprise less than 10 wt% repeat units derived from vinyl acetate monomers, based on the dry weight of the polymer.

As used herein, the term poly(ethylene-vinyl acetate) refers to a polymer comprising repeat units derived from ethylene monomers and vinyl acetate monomers. Generally a poly(ethylene-vinyl acetate) will comprise at least 40 wt% repeat units derived from ethylene monomers, based on the dry weight of the polymer. Generally a poly(ethylene-vinyl acetate) will comprise at least 10 wt% repeat units derived from vinyl acetate monomers, based on the dry weight of the polymer. Generally a poly(ethylenevinyl acetate) will comprise less than 10 wt% repeat units derived from (meth)acrylic monomers, i.e. acrylic, methacrylic, acrylate and/or methacrylate monomers, based on the dry weight of the polymer.

As used herein, the term poly vinyl acetate (meth)acrylic refers to a polymer comprising repeat units derived from vinyl acetate monomers and (meth)acrylic monomers. The latter encompasses (meth)acrylate monomers. Generally a poly vinyl acetate (meth)acrylic will comprise at least 10 wt% repeat units derived from vinyl acetate monomers, based on the dry weight of the polymer. Generally a poly vinyl acetate (meth)acrylic will comprise less than 50 wt% repeat units derived from (meth)acrylic monomers, based on the dry weight of the polymer, e.g. a poly vinyl acetate (meth)acrylic may comprise 10-40 wt% repeat units derived from (meth)acrylic monomers.

As used herein, the term "alkyd" refers to an alkyd resin, or mixture of alkyd resins. The alkyd is derived from at least a polycarboxylic acid and/or anhydride, a polyol, and an unsaturated fatty acid or oil.

As used herein, the term "alkyd modified poly(meth)acrylic" refers to a poly(meth)acrylic that has been modified by at least one alkyd.

As used herein, the term "styrene monomer" refers to styrene, and derivatives thereof that retain the vinyl benzene core, e.g. alpha-methyl styrene and 4-vinyl toluene.

As used herein, the term "preservative" refers to compounds that act to prevent biological growth, e.g. growth of bacteria, mould and/or algae. Preservatives are also referred to as biocides, in can biocides, (dry) film biocides, antimicrobial agents, biologically active compounds, (dry) film preservatives, in can preservatives, wet state preservatives, wet state biocides and toxicants. Preservatives can also be named according to the target microorganism e.g. fungicide, mildewicide, algicide, algaecide and bactericide.

As used herein, the term "wet-state preservative" refers to compounds that are used for the preservation of aqueous compositions by the control of microbial deterioration in order to protect the composition in the wet state i.e. during production and storage.

As used herein, the term "dry-film preservative" refers to compounds that are used for the preservation of films or coatings by the control of microbial deterioration in order to protect the initial properties of coatings and films formed from the compositions in which they are present.

As used herein, the term "volatile organic compound (VOC)" refers to organic compounds having a boiling point $\leq$ 250°C at 101.3 kPa. This is the definition given in EU Directive 2004/42/CE.

As used herein, the term "colour pigment" is a pigment that is added to a composition to give colour. Colour pigments include white pigments, such as $TiO_2$.

As used herein, the term "base composition" is an aqueous composition to which tinters are added to obtain the desired colour. A base composition can comprise different amounts of $TiO_2$ to enable different shades and colours to be obtained. A base composition can also contain no $TiO_2$ to enable dark colours to be obtained. A base composition can also contain colour pigments.

As used herein, the term "tinted" refers to a coating that is coloured by the presence of tinters or colorants.

As used herein, the term "tinter" refers to a colorant that is added to an aqueous composition, e.g. coating composition to provide a desired colour. Typically tinters are added after the general preparation of the base composition to provide a coloured composition. Typically tinters comprise colour pigments and optionally other ingredients such as water, solvent and additives.

As used herein, the term "multicolour tinting system" refers to a tinting machine comprising a plurality of tinters, and software containing colour formulations. When the multicolour tinting system is activated by a specific colour being chosen, a specific combination and amount of tinters are added to the base composition by the tinting machine, according to its software. The composition is mixed, preferably with a mixing machine, giving a composition with homogenous colour.

As used herein, the term "particle size" when used in relation to polymer dispersions refer to the Z-average diameter size as determined by ISO 22412:2017 using a Malvern Zetasizer Nano S instrument.

As used herein, the term "average diameter" refers to the Z-average diameter as determined by ISO 22412:2017 using a Malvern Zetasizer Nano S instrument.

As used herein, the term "molecular weight" refers to weight average molecular weight (Mw), unless otherwise specified. It is determined by Gel Permeation Chromatography.

As used herein, the term "MFFT" refers to "minimal film formation temperature" as determined by ASTM D2354-10e1.

As used herein, the term "weight % (wt%)", when used in relation to individual constituents of the composition, refers to the actual weight of constituent, i.e. without volatile components present, unless otherwise specified.

As used herein, the term "weight % (wt%)", when used in relation to the aqueous composition, refers to an ingredient weight (solids) relative to the total weight of the composition, i.e. including non-volatile and volatile components, unless otherwise specified.

## DETAILED DESCRIPTION OF THE INVENTION

The present invention relates to an aqueous composition, preferably a coating composition, comprising:

(i) binder
(ii) >0.1 wt% $C_{5-9}$ acyclic, vicinal diol; and
(iii) water,

wherein said composition has a pH of >7.0 and said wt% is based on the total weight of the composition. Preferably the composition has a pH of 7.5-12.0, more preferably 8.0-12.0, still more preferably 8.0-11.0 and yet more preferably 8.0 to <9.0.

Preferably the composition further comprises: (iv) pH modifier; (v) wetting and/or dispersing agents; (vi) foam control agents; (vii) colour pigments; (viii) filler; (ix) rheology modifier; (x) wet-state preservatives; and/or (xi) dry-film preservatives.

Advantageously, the aqueous composition of the present invention is waterborne, yet has microbial resistance, and is therefore storage stable. It has been found that improved microbial, in particular bacterial, resistance is achieved, even when the pH is in the range 8.0-11.0 or even 8.0 to <9.0. This is beneficial as the resulting composition is non-corrosive, and can be safely used by non-professional end-users. Moreover, the level of microbial resistance is sufficient that wet-state preservatives may optionally be omitted from the composition. This is advantageous as it avoids skin sensitisation issues associated with some of the most commonly used wet-state preservatives and also satisfies the regulatory requirements on the amount and types of wet-state preservatives present in coating compositions such as paints, laquers, varnishes etc.

A further benefit of the aqueous composition of the present invention is that it contains low levels of VOCs.

Moreover, the aqueous composition, preferably coating composition, of the present invention is preferably a one-component coating composition. This is highly advantageous due to its ease of use for non-professionals.

*Binder*

The aqueous composition of the present invention comprises a binder. The binder may be organic or inorganic. Examples of suitable inorganic binders include silicate, slaked lime, water glass and silicone emulsion. However, organic binders are preferred. In a preferred aqueous composition of the present invention, the organic binder has a weight average molecular weight of 3,000-3,000,000, preferably 4,000-2,500,000 and more preferably 4,000-2,000,000 g/mol.

In a preferred aqueous composition of the present invention the organic binder is a composition comprising polymer particles and/or droplets dispersed in water. Preferably the polymer particles and/or droplets have an average diameter of 40-600 nm, more preferably 50-500 nm and still more preferably 50-400 nm, preferably as determined by ISO 22412:2017. The polymer particles and/or droplets constitute the film forming polymer present in the composition and coalesce after application and during drying.

In another preferred aqueous composition of the present invention, the organic binder has a minimal film formation temperature (MFFT) of less than 50 °C, preferably less than 30 °C and still more preferably less than 20 °C. The MFFT may be 5 °C or less. This is advantageous as a low MFFT makes it possible to reduce the amount of cosolvent needed and thereby reduce the VOC of the composition. MFFT is preferably determined by ASTMD2354-10e1.

In a preferred aqueous composition of the present invention the organic binder is a polymer dispersion comprising 30-70 wt% and more preferably 35-60 wt% polymer particles and/or droplets, based on the weight of the dispersion. The dispersion may optionally comprise other conventional additives such as dispersing agents, wet state preservatives and foam control agents.

In a preferred aqueous composition of the present invention the organic binder is selected form poly (meth) acrylic, poly styrene (meth)acrylic, poly(ethylene-vinyl acetate), poly vinyl acetate (meth)acrylic, alkyd, polyester, polyurethane, alkyd modified polyurethane, (meth)acrylic modified polyurethane, urethane modified alkyd, (meth)acrylic modified alkyd, alkyd modified poly (meth)acrylic, polycarbonate and combinations thereof. More preferably the organic binder is selected form poly (meth)acrylic, poly styrene (meth)acrylic, poly(ethylene-vinyl acetate), poly vinyl acetate (meth)acrylic, and combinations thereof.

*Poly (meth)acrylic and poly styrene (meth)acrylic*

One preferred aqueous composition of the present invention comprises an organic binder selected from poly (meth)acrylic, poly styrene (meth)acrylic and combinations thereof. These organic binders both comprise repeat units derived from (meth)acrylic monomers. However, poly (meth)acrylic binder comprises less than 10 wt% repeat units derived from styrene monomers, based on the dry weight of the polymer, whereas poly styrene (meth)acrylic comprises at least 10 wt% repeat units derived from styrene, based on the dry weight of the polymer.

Preferably the poly (meth)acrylic or poly styrene (meth)acrylic comprises a residue of at least one monomer of formula (I):

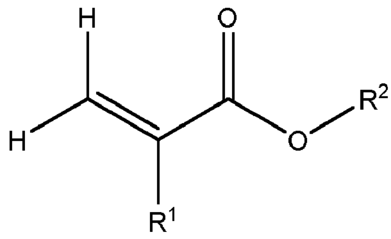

(I)

$R^1$ is H or $CH_3$; and
$R^2$ is H or $C_{1-18}$ alkyl, preferably $C_{1-10}$ alkyl and more preferably $C_{1-8}$ alkyl.

Preferably the poly (meth)acrylic and poly styrene (meth)acrylic comprises a residue of at least one monomer selected from methyl (meth)acrylate, ethyl (meth)acrylate, propyl (meth)acrylate, butyl (meth)acrylate, hexyl (meth) acrylate, 2-ethylhexyl (meth)acrylate, octyl (meth)acrylate, isooctyl (meth)acrylate, n-decyl (meth)acrylate, isodecyl (meth)acrylate, tert-butyl (meth)acrylate, (meth)acrylic acid and 2-hydroxyethyl (meth)acrylate.

In poly (meth)acrylics and poly styrene (meth)acrylics present in the aqueous compositions of the present invention, the poly (meth)acrylic and poly styrene (meth)acrylic comprises 1, 2, 3, 4 or 5 different residues of (meth)acrylate monomers of formula (I). In preferred compositions, the poly (meth)acrylic comprises residue(s) of 2, 3, 4 or 5 monomers of formula (I).

One preferred aqueous composition of the present invention comprises poly (meth)acrylic. Preferably the poly (meth)acrylic comprises at least 60 wt%, more preferably at least 70 wt%, still more preferably at least 85 wt% and yet more preferably at least 95 wt% repeat units derived from (meth)acrylic monomers, e.g. repeat units derived from monomers of formula (I), based on the dry weight of the polymer. Optionally the poly (meth)acrylic comprises 100 wt% repeat units derived from (meth)acrylic monomers, e.g. repeat units derived from monomers of formula (I), based on the dry weight of the polymer.

Preferred poly (meth)acrylic comprises 50-100 wt%, more preferably 60-100 wt%, still more preferably 75-100 wt% and yet more preferably 90-100 wt% repeat units derived from (meth)acrylic monomers, e.g. repeat units derived from monomers of formula (I), based on the dry weight of the polymer. Other monomer types that may be present in poly (meth) acrylics include acrylamide, vinyl (such as vinyl esters of versatic acids and mixtures thereof), butadiene, styrene and combinations thereof. Preferably the poly (meth)acrylic comprises 0-50 wt%, more preferably 0-40 wt%, still more preferably 0-25 wt% and yet more preferably 0-10 wt% monomers other than (meth)acrylic monomers, e.g. repeat units derived from monomers of formula (I), based on the dry weight of the polymer.

Preferred poly (meth)acrylic comprises less than 10 wt% repeat units derived from styrene monomers selected from styrene, $\alpha$-methyl styrene, 4-vinyl toluene, and combinations thereof, based on the dry weight of the polymer. Preferred poly (meth)acrylic comprises less than 10 wt% repeat units derived from vinyl acetate monomer, based on the dry weight of the polymer.

Another preferred aqueous composition of the present invention comprises poly styrene (meth)acrylic. Preferred poly styrene (meth)acrylic comprises at least 10 wt%, more preferably at least 15 wt%, still more preferably at least 20 wt% and yet more preferably at least 30 wt% repeat units derived from styrene monomers selected from styrene, $\alpha$-methyl styrene, 4-vinyl toluene, and combinations thereof, based on the dry weight of the polymer. Preferred poly styrene (meth) acrylic comprises 10-60 wt%, more preferably 15-55 wt%, still more preferably 20-50 wt% and yet more preferably 30-45 wt% repeat units derived from styrene monomers, based on the dry weight of the polymer.

Preferred poly styrene (meth)acrylic comprises 40-90 wt%, more preferably 45-85 wt%, still more preferably 50-80 wt% and yet more preferably 55-70 wt% repeat units derived from (meth)acrylic monomers, e.g. repeat units derived from monomers of formula (I), based on the dry weight of the polymer.

A particularly preferred poly styrene (meth)acrylic comprises 10-60 wt%, more preferably 15-55 wt%, still more preferably 20-50 wt% and yet more preferably 30-45 wt% repeat units derived from styrene monomers and 40-90 wt%, more preferably 45-85 wt%, still more preferably 50-80 wt% and yet more preferably 55-70 wt% repeat units derived from (meth)acrylic monomers, e.g. repeat units derived from monomers of formula (I), based on the dry weight of the polymer.

Optionally poly styrene meth(acrylic) comprises 0-30 wt%, more preferably 0-20 wt% and preferably 0-10 wt% of repeat units derived from other monomers such as acrylamide, vinyl monomers (such as vinyl esters of versatic acids and mixtures thereof) and/or butadiene.

*Poly(ethylene-vinyl acetate)*

Another preferred aqueous composition of the present invention comprises the organic binder poly(ethylene-vinyl acetate). This binder comprises repeat units derived from ethylene and vinyl acetate.

Preferably the poly(ethylene-vinyl acetate) comprises at least 10 wt%, preferably at least 15 wt%, and more preferably at least 20 wt% repeat units derived from vinyl acetate, based on the dry weight of the polymer. Preferably the poly(ethylene-vinyl acetate) comprises 10-55 wt%, more preferably 10-50 wt% and still more preferably 10-40 wt% repeat units derived from vinyl acetate, based on the dry weight of the polymer.
Preferably the poly(ethylene-vinyl acetate) comprises at least 40 wt%, preferably at least 45 wt%, more preferably at least 50 wt% and still more preferably at least 60 wt% repeat units derived from ethylene, based on the dry weight of the polymer. Preferably the poly(ethylene-vinyl acetate) comprises 45-90 wt%, more preferably 50-90 wt% and still more preferably 60-90 wt% repeat units derived from ethylene, based on the dry weight of the polymer.
A particularly preferred poly(ethylene-vinyl acetate) comprises 10-55 wt%, more preferably 10-50 wt% and still more preferably 10-40 wt% repeat units derived from vinyl acetate and 45-90 wt%, more preferably 50-90 wt% and still more preferably 60-90 wt% repeat units derived from ethylene, based on the dry weight of the polymer
Preferably the poly(ethylene-vinyl acetate) comprises less than 10 wt% and more preferably less than 5 wt% repeat units derived from monomers, other than ethylene or vinyl acetate.

*Poly vinyl acetate (meth)acrylic*

Another preferred aqueous composition of the present invention comprises the organic binder poly vinyl acetate (meth)acrylic. This binder comprises repeat units derived from vinyl acetate and (meth)acrylic monomers. Preferably the poly vinyl acetate (meth)acrylic comprises at least 10 wt%, preferably at least 20 wt%, and more preferably at least 30 wt% repeat units derived from vinyl acetate, based on the dry weight of the polymer. Preferably the poly vinyl acetate (meth) acrylic comprises 10-90 wt%, more preferably 20-80 wt% and still more preferably 30-70 wt% repeat units derived from vinyl acetate, based on the dry weight of the polymer.
Preferably the poly vinyl acetate (meth)acrylic comprises at least 10 wt%, preferably at least 20 wt% and more preferably at least 30 wt% repeat units derived from (meth)acrylic monomers, e.g. repeat units derived from monomers of formula (I), based on the dry weight of the polymer. Preferably the poly vinyl acetate (meth)acrylic comprises 10-90 wt%, more preferably 20-80 wt% and still more preferably 30-70 wt% repeat units derived from (meth)acrylic monomers, e.g. repeat units derived from monomers of formula (I), based on the dry weight of the polymer.
A particularly preferred poly vinyl acetate (meth)acrylic comprises 10-90 wt%, more preferably 20-80 wt% and still more preferably 30-70 wt% repeat units derived from vinyl acetate, and 10-90 wt%, more preferably 20-80 wt% and still more preferably 30-70 wt% repeat units derived from (meth)acrylic monomers, e.g. repeat units derived from monomers of formula (I), based on the dry weight of the polymer.
It will be appreciated that when vinyl acetate monomer is incorporated into organic binder present in the aqueous compositions of the present invention that it will start to hydrolyse to vinyl alcohol during production and continue during storage. The above-recited contents of repeat units derived from vinyl acetate therefore refer to the corresponding amount of monomer that is incorporated into the polymer during manufacture. It will be appreciated that the actual wt% of repeat units derived from vinyl acetate monomer in the polymer actually present in the aqueous composition will be the sum of the wt% of repeat units derived from vinyl acetate, and its hydrolysed form, vinyl alcohol.
A preferred aqueous composition, e.g. coating composition, of the present invention comprises 1-70 wt%, preferably 2-60 wt% and more preferably 3-35 wt% binder (solids), based on the total weight of the composition.
A preferred aqueous composition, e.g. coating composition, of the present invention comprises 2-80 wt%, preferably 4-70 wt% and more preferably 6-70 wt% polymer dispersion, based on the total weight of the composition.

*Vicinal diol*

The aqueous composition of the present invention comprises a vicinal diol, namely a $C_{5-9}$ acyclic, vicinal diol, preferably a $C_{6-9}$ acyclic, vicinal diol, more preferably a $C_{6-8}$ acyclic, vicinal diol, still more preferably a $C_6$, $C_7$ or $C_8$ acyclic, vicinal diol, and especially preferably a $C_6$ or $C_7$ acyclic, vicinal diol.
Preferably the vicinal diol is linear. Preferably the vicinal diol is non-branched.
In the $C_{5-9}$ acyclic, vicinal diol present in the aqueous compositions of the present invention, the vicinal diols may be present on any two adjacent carbon atoms. For instance, they may be present on carbons 1 and 2, carbons 2 and 3, carbons 3 and 4, carbons 4 and 5, carbons 6 and 7, carbons 7 and 8 and carbons 8 and 9. Preferably, however, the vicinal diol is a 1,2 acyclic, vicinal diol.
Preferably the vicinal diol contains only two hydroxyl groups. Preferably, therefore, there are no other hydroxyl groups in the vicinal diol, other than those forming the vicinal diol functional group.
The vicinal diol present in the aqueous composition of the present invention preferably does not comprise any N, S or Si atoms. Preferably the only heteroatom-containing functional groups present in the vicinal diol are hydroxy groups.
The vicinal diol present in the aqueous composition of the present invention preferably has a boiling point of 200-290 °C, more preferably 210-280 °C and still more preferably 220-270 °C, wherein boiling point is measured at 1 atm.

The vicinal diol present in the aqueous composition of the present invention preferably has a density of 0.90 to <1.00 g/$cm^3$, more preferably 0.92-0.97 g.$cm^3$ and still more preferably 0.93-0.96 g/$cm^3$.

One preferred aqueous composition of the present invention comprises a mixture of two or more vicinal diols.

Another preferred aqueous composition of the present invention comprises a single vicinal diol.

A preferred aqueous composition, e.g. coating composition, of the present invention comprises ≥0.25 wt%, preferably ≥0.30 wt%, more preferably ≥0.40 wt% and still more preferably ≥0.50 wt% vicinal diol, based on the total weight of the composition. A further preferred aqueous composition, e.g. coating composition, of the present invention comprises ≤2.00 wt%, preferably ≤1.50 wt%, more preferably ≤ 1.20 wt% and still more preferably ≤1.10 wt% vicinal diol, based on the total weight of the composition. A particularly preferred aqueous composition, e.g. coating composition, of the present invention comprises 0.25-2.00 wt%, preferably 0.30 to <2.00 wt%, more preferably 0.40-1.50 wt%, and still more preferably 0.50-1.20 wt% vicinal diol, based on the total weight of the composition. Another particularly preferred aqueous composition, e.g. coating composition comprises 0.25 to <2.00 wt%, more preferably 0.30 to <2.00 wt%, still more preferably 0.40 to <2.00 wt% and still more preferably 0.50 to <2.00 wt% vicinal diol, based on the total weight of the composition. Whenever the wt% of $C_{5-9}$ acyclic, vicinal diol is stated herein, it refers to the total amount of $C_{5-9}$ acyclic, vicinal diol. Hence if a mixture of two or more $C_{5-9}$ acyclic, vicinal diols is present, the wt% present refers to the total amount. As an example, if a composition comprises 0.08 wt% $C_6$ acyclic, vicinal diol and 0.08 wt% $C_7$ acyclic, vicinal diol, the total amount of $C_{5-9}$ acyclic, vicinal diol is 0.16 wt%, and the composition meets the requirement to comprise >0.1 wt% $C_{5-9}$ acyclic, vicinal diol.

*Water*

The aqueous composition of the present invention comprises water. The water present in the aqueous composition may derive from the binder, e.g. organic binder provided in the form of a dispersion that has an aqueous continuous phase, and/or other components present in the composition which are supplied in water, and water which is added to the overall mixture. Optionally, water may be added immediately prior to application. The water added to the overall mixture forming the composition is preferably desalinated water, recirculated water, deionised water, demineralised water or tap water.

A preferred aqueous composition of the present invention comprises 5 to 90 wt%, more preferably 10 to 70 wt%, and still more preferably 20 to 55 wt% water, based on the total weight of the composition. This represents the total amount of water present, i.e. the amount of water added as well as the water added via its presence in other ingredients such as organic binder.

A preferred aqueous composition of the present invention has a pH of ≤12.0, preferably ≤11.0, more preferably ≤10.0, still more preferably ≤9.5, and especially preferably ≤9.0. A pH of ≤11.5 is preferred since the composition is then classed as non-corrosive. A preferred aqueous composition of the present invention has a pH of ≥7.5, preferably ≥8.0 and more preferably ≥8.5.

A particularly preferred aqueous composition of the present invention has a pH of 7.5-12.0, preferably 8.0-12.0, more preferably 8.0-11.0, and still more preferably 8.0 to <9.0. Another particularly preferred aqueous composition of the present invention has pH of 7.5 to <9.0, preferably 8.0 to <9.0, and still more preferably 8.5 to <9.0.

*Wet-state preservatives*

A preferred aqueous composition of the present invention comprises one or more wet-state preservatives. At least two different types of such compositions exist. First, there are the aqueous compositions comprising wet-state preservatives that derive from the raw materials used to make the composition. In these compositions, no wet-state preservatives per se are added during manufacture of the composition itself. Second, there are the aqueous compositions comprising wet-state preservatives that derive from the raw materials as well as wet-state preservatives that are added during preparation of the composition itself.

Representative examples of suitable wet-state preservatives that may be present in the aqueous composition include:

Isothiazolines: Reaction mass of 5-chloro-2-methyl-4-isothiazolin-3-one and 2-methyl-2H-isothiazol-3-one (3:1) (CIT/MIT); 5-chloro-2-methyl-4-isothiazolin-3-one (CIT); 2-Methyl-4-isotiazolin-3-one (MIT); 2-Methyl-1,2-Benzisothiazol-3(2H)-one (MBIT); 1,2-Benzisothiazolin-3-one (BIT); 2-Octyl-2H-isothiazol-3-one (OIT); 2-n-butyl - benzo[d]isothiazol-3-one (BBIT);
Amides/Ureas: Benzamide, 2,2'-dithiobis (DTBMA), 2,2-dibromo-2-cyanoacetamide (DBNPA);
Pyrithiones: Zinc pyrithione (ZnPT); Sodium pyrithione (NaPT);
Organohalogens: 2-Bromo-2-nitro-1,3-propanediol (Bronopol);
Carbamates: 3-iodo-2-propynylbutylcarbamate (IPBC);

Silver chemistry: Reaction mass of titanium dioxide and silver chloride; and

Formaldehyde donor/CH2O adducts: N,N-Methylenebismorpholine (MBM); (ethylenedioxy)dimethanol (EDDM); α, α' α"-trimethyl-1,3,5-triazine-1,3,5(2H,4H,6H)-triethanol (HPT); 3,3'-methylenebis[5-methyloxazolidine] (Oxazolidin/MBO); Sodium N-(hydroxymethyl)glycinate; Tetrahydro1,3,4,6tetrakis(hydroxymethyl)imidazo[4,5-d]imidazole-2,5(1H,3H)-dione (TMAD); Tetrakis(hydroxymethyl)phosphonium sulphate(2:1) (THPS); Methenamine 3-chloroallylochloride (CTAC); 2,2',2"-(hexahydro-1,3,5-triazine-1,3,5-triyl)triethanol (HHT); 1,3-bis(hydroxymethyl)-5,5-dimethylimidazolidine-2,4-dione (DMDMH); 7a-ethyldihydro-1H,3H,5H-oxazolo[3,4-c]oxazole (EDHO); cis-1-(3-chloroallyl)-3,5,7-triaza-1-azoniaadamantanechloride (cis CTAC); (benzyloxy)methanol.

Preferably the wet state preservatives present in the aqueous composition of the invention is selected from; Reaction mass of 5-chloro-2-methyl-4-isothiazolin-3-one and 2-methyl-2H-isothiazol-3-one (3:1) (CIT/MIT), 5-chloro-2-methyl-4-isothiazolin-3-one (CIT), 2-Methyl-4-isotiazolin-3-one (MIT), 2-Methyl-1,2-Benzisothiazol-3(2H)-one (MBIT), 1,2-Benzisothiazolin-3-one (BIT), 2-Octyl-2H-isothiazol-3-one (OIT), Benzamide, 2,2'-dithiobis (DTBMA), 2,2-dibromo-2-cyanoacetamide (DBNPA), zinc pyrithione (ZnPT), Sodium pyrithione (NaPT), 2-Bromo-2-nitro-1,3-propanediol (Bronopol), 3-iodo-2-propynylbutylcarbamate (IPBC) and combinations thereof.

If present, the wet state preservatives are preferably in the following amounts; 0.0001-0.004% (1-40 ppm) of reaction mass of 5-chloro-2-methyl-4-isothiazolin-3-one and 2-methyl-2H-isothiazol-3-one (3:1) (CIT/MIT), 0.0001-0.004% (1-40 ppm) of 5-chloro-2-methyl-4-isothiazolin-3-one (CIT), 0.0001-0.02% (1-200 ppm) of 2-Methyl-4-isotiazolin-3-one (MIT), 0.001-0.06% (10-600 ppm) of 2-Methyl-1,2-Benzisothiazol-3(2H)-one (MBIT), 0.001-0.06% (10-600 ppm) of 1,2-Benzisothiazolin-3-one (BIT), 0.001-0.1% (10-1000 ppm) of 2-Octyl-2H-isothiazol-3-one (OIT), 0.001-0.06% (10-600 ppm) of Benzamide, 2,2'-dithiobis (DTBMA), 0.0001-0.1% (1-1000 ppm) of 2,2-dibromo-2-cyanoacetamide (DBNPA), 0.001-0.06% (10-600 ppm) of zinc pyrithione (ZnPT), 0.001-0.06% (10-600 ppm) of Sodium pyrithione (NaPT), 0.0001-0.05% (1-500 ppm) of 2-Bromo-2-nitro-1,3-propanediol (Bronopol) and/or 0.001-0.2% (10-2000 ppm) 3-iodo-2-propynylbutylcarbamate (IPBC). The preferred wet state preservatives mainly function as bactericides, with the exception of 2-octyl-2H-isothiazol-3-one (OIT), zinc pyrithione (ZnPT) and 3-iodo-2-propynylbutylcarbamate (IPBC) which are known to mainly function as fungicides.

One preferred aqueous composition of the present invention comprises ≤0.01wt%, preferably ≤0.0015 wt%, more preferably <0.0001 wt% and still more preferably 0 wt% wet-state preservatives, based on the total weight of the composition. More preferably such a composition comprises 0-0.01 wt%, preferably 0-0.0015 wt%, more preferably 0 to <0.0001 wt% wet-state preservatives, based on the total weight of the composition.

One particularly preferred aqueous composition of the present invention comprises ≤0.01wt%, preferably ≤0.0015 wt%, more preferably <0.0001 wt% and still more preferably 0 wt% wet-state preservatives selected from reaction mass of 5-chloro-2-methyl-4-isothiazolin-3-one and 2-methyl-2H-isothiazol-3-one (3:1) (CIT/MIT), 5-chloro-2-methyl-4-isothiazolin-3-one (CIT), 2-methyl-4-isotiazolin-3-one (MIT), 2-methyl-1,2-benzisothiazol-3(2H)-one (MBIT), 1,2-benzisothiazolin-3-one (BIT), benzamide, 2,2'-dithiobis (DTBMA), 2,2-dibromo-2-cyanoacetamide (DBNPA), sodium pyrithione (NaPT), 2-bromo-2-nitro-1,3-propanediol (Bronopol), based on the total weight of the composition.

Another preferred aqueous composition of the present invention comprises ≤0.10 wt%, preferably ≤0.075 wt%, more preferably ≤0.05 wt% and still more preferably ≤0.25 wt% wet-state preservatives, based on the total weight of the composition. More preferably such a composition comprises 0.0001-0.10 wt%, preferably 0.0015-0.075 wt%, more preferably 0.01-0.05 wt% and still more preferably 0.01-0.025 wt% wet-state preservative, based on the total weight of the composition.

Another preferred aqueous composition of the present invention comprises ≤0.20 wt%, preferably ≤0.15 wt%, more preferably ≤0.10 wt% and still more preferably ≤0.09 wt% wet-state preservatives, based on the total weight of the composition. More preferably such a composition comprises 0.0001-0.20 wt%, preferably 0.0015-0.15 wt%, more preferably 0.01-0.10 wt% and still more preferably 0.01-0.09 wt% wet-state preservative, based on the total weight of the composition.

When the aqueous composition of the present invention comprises 0-0.01 wt%, preferably 0-0.0015 wt%, more preferably 0 to <0.0001 wt% and still more preferably 0 wt% wet-state preservative, the amount of $C_{5-9}$ acyclic, vicinal diol present is preferably 0.25-2.00 wt%, more preferably 0.30 to <2.00 wt% and still more preferably 0.40-1.50 wt%, based on the total weight of the composition.

When the aqueous composition of the present invention comprises 0.0001-0.10 wt%, preferably 0.0015-0.075 wt%, more preferably 0.01-0.05 wt% and still more preferably 0.01-0.025 wt% wet-state preservative, the amount of $C_{5-9}$ acyclic, vicinal diol present is preferably 0.25-2.00 wt%, more preferably 0.30 to <2.00 wt% and still more preferably 0.40-1.50 wt%, based on the total weight of the composition.

When the aqueous composition of the present invention comprises 0.0001-0.20 wt%, preferably 0.0015-0.15 wt%, more preferably 0.01-0.10 wt% and still more preferably 0.01-0.09 wt% wet-state preservative, the amount of $C_{5-9}$ acyclic, vicinal diol present is preferably 0.25-2.00 wt%, more preferably 0.30 to <2.00 wt% and still more preferably 0.40-1.50 wt%, based on the total weight of the composition.

*Dry film preservatives*

An aqueous composition of the present invention optionally comprises one or more dry film preservatives. When the aqueous composition is a coating composition for exterior use, the composition preferably comprises a dry film preservative.

The amount of dry-film preservative present in the aqueous composition mainly depends on the intended purpose of the composition. If, for example, the aqueous composition is a coating composition for interior use the composition may contain relatively low amount or be substantially free of dry-film preservative. If present, such a composition preferably comprises 0.005-0.50 wt%, preferably 0.01-0.40 wt%, more preferably 0.015-0.30 wt%, and still more preferably 0.02-0.20 wt% dry film preservatives, based on the total weight of the composition.

On the other hand, if the aqueous composition is a coating composition for exterior use, the composition preferably comprises 0.05-5 wt%, preferably 0.1-2.5wt%, more preferably 0.15-2 wt%, and still more preferably 0.25-1.5 wt% dry film preservatives, based on the total weight of the composition.

Representative examples of suitable dry film preservatives that may be present in the aqueous composition of the present invention include:

Isothiazolines: 4,5-Dichlor-2-n-octyl-4-isotiazolin-3-one (DCOIT); 2-Octyl-2H-isothiazol-3-one (OIT); 2-n-butylbenzo [d]isothiazol-3-one (BBIT);
2-thiazol-4-yl-1Hbenzoimidazole (Thiabendazole);
Azoles: Methyl (E)-2-{2-[6-(2-cyanophenoxy)pyrimidin-4-yloxy]phenyl}-3-methoxyacrylate (Azoxystrobin); 1-[[2-(2,4-dichlorophenyl)-4-propyl-1,3-dioxolan-2-yl]methyl]-1H-1,2,4-triazole (Propiconazole); 1-(4-chlorophenyl)-4,4-dimethyl-3-(1,2,4-triazol-1-ylmethyl)pentan-3 ol (Tebuconazole);
Amides/Ureas: 3-(3,4-dichlorophenyl)-1,1-dimethylurea (Diuron); 3-(4-Isopropylphenyl)-1,1-dimethylurea (Isoproturon);
Pyrithiones: Zinc pyrithione (ZnPT); Sodium pyrithione (NaPT);
Organohalogens: 4-(2,2-difluoro-1,3-benzodioxol-4-yl)-1H-pyrrole-3-carbonitrile (Fludioxonil); Dichloro-N-[(dimethylamino)sulphonyl] fluoro-N-(ptolyl)methanesulphenamide (Tolylfluanid);
Carbamates: 3-iodo-2-propynylbutylcarbamate (IPBC); Methyl 2-benzimidazoie carbamate (Carbendazim);
Silver chemistry: Reaction mass of titanium dioxide and silver chloride ; Silver copper zeolite; Silver nitrate; Silver phosphate glass ; Silver sodium hydrogen zirconium phosphate; Silver zeolite; Silver zinc zeolite; and
Triazines: (4E)-4-(Ethylimino)-N-(2-methyl-2-propanyl)-6-(methylsulfanyl)-1,4-dihydro-1,3,5-triazin-2-amine (Terbutryn).

Preferably the dry film preservative present in the aqueous composition of the present invention is selected from 3-(3,4-dichlorophenyl)-1,1-dimethylurea (Diuron), (4E)-4-(Ethylimino)-N-(2-methyl-2-propanyl)-6-methylsulfanyl)-1,4-dihydro-1,3,5-triazin-2-amine (Terbutryn), carbendazim, zinc pyrithione, 2-octyl-2H-isothiazol-3-one (OIT), 4,5-dichlor-2-n-octyl-4-isotiazolin-3-one (DCOIT), 3-iodo-2-propynylbutylcarbamate (IPBC), Methyl (E)-2-{2-[6-(2-cyanophenoxy)pyrimidin-4-yloxy]phenyl}-3-carmethoxyacrylate (Azoxystrobin) and combinations thereof.

If present the dry film preservative is preferably present in the following amounts; 0.1-3.0% (1000-30000 ppm) of 3-(3,4-dichlorophenyl)-1,1-dimethylurea (Diuron), 0.1-3.0% (1000-30000 ppm of (4E)-4-(Ethylimino)-N-(2-methyl-2-propanyl)-6-methylsulfanyl)-1,4-dihydro-1,3,5-triazin-2-amine (Terbutryn), 0.01-0.3% (100-3000 ppm) of carbendazim, 0.01-0.5% (100-5000 ppm) of zinc pyrithione, 0.001-0.3% (10-3000 ppm) of 2-octyl-2H-isothiazol-3-one (OIT), 0.001-0.3% (10-3000 ppm) of 4,5-dichlor-2-n-octyl-4-isotiazolin-3-one (DCOIT), 0.01-0.75% (100-7500 ppm) 3-iodo-2-propynylbutylcarbamate (IPBC) and/or 0.01-0.75% (100-7500 ppm) Methyl (E)-2-{2-[6-(2-cyanophenoxy)pyrimidin-4-yloxy]phenyl}-3-carmethoxyacrylate (Azoxystrobin). The preferred dry film preservatives are fungicides, with the exception of Diuron and Terbutryn which are known to function as algicides.

*pH modifier*

The aqueous composition of the present invention preferably comprises a pH modifier. Preferably the type and amount of pH modifier is selected so as to adjust the pH of the aqueous composition to 7.5-12.0, preferably 8.0-12.0, more preferably 8.0-11.0, and still more preferably 8.0 to <9.0.

In a preferred aqueous composition of the present invention the pH modifier is selected from alkali metal hydroxide, alkaline earth metal hydroxide, alkali metal carbonate, ammonium hydroxide, ammonia, amines, alkylalkoxysilanes, alkylalkoxysiloxanes, monoalkylsilanetriol, dialkylsilanediol, trialkylsilanol, alkali metal salts of monoalkylsilanetriol and combinations thereof. Examples of suitable alkali metal hydroxide include lithium hydroxide, potassium hydroxide, and sodium hydroxide. Examples of suitable alkaline earth metal hydroxide include calcium hydroxide and magnesium hydroxide. Examples of suitable alkali metal carbonate include sodium carbonate and sodium bicarbonate.

Examples of suitable amines include 2-amino-2-methyl-1,3-propanediol, 2-amino-2-ethyl-1,3-propanediol, 2-dimethylamino-2-methylpropanol, dimethylglucamine, 2-amino-1-butanol, tris(hydroxymethyl)aminomethane, 2-amino-2-methyl-1-propanol, and 1-amino-2-methyl-2-propanol.

In a particularly preferred composition of the present invention the pH modifier is selected from sodium hydroxide, ammonia, 2-amino-2-methyl-1,3-propanediol or combinations thereof.

The amount of pH modifier preferably present in the aqueous composition of the present invention depends on the nature of the pH modifier used (e.g. its alkalinity) and on the nature (e.g. acidity) of the other ingredients present in the composition. The skilled person will readily be able to determine a suitable amount of pH modifier based on the target pH, e.g. 7.5-12.0, preferably 8.0-12.0, more preferably 8.0-11.0, and still more preferably 8.0 to <9.0.

The aqueous composition of the present invention preferably comprises 0-5.0 wt%, preferably 0.01-3.0 wt%, more preferably 0.01-2.0 wt%, and still more preferably 0.01-1.0 wt% pH modifier, based on the total weight of the composition.

*Other Ingredients*

The aqueous composition of the present invention preferably comprises a wetting and/or dispersing agent. Wetting and/or dispersing agents are typically added to disperse and/or stabilize pigments and fillers in the aqueous composition. Wetting and dispersing agents are often also referred to as surfactants.

A wide range of wetting and dispersing agents is commercially available, and may be used in the aqueous composition of the present invention. Suitable wetting and dispersing agents include conventional anionic, cationic, non-ionic and amphoteric dispersing agents as well as combinations thereof. Preferably a mixture of wetting and dispersing agents is used.

Another type of wetting agent is a substrate wetting agent.

The aqueous composition of the present invention preferably comprises 0-4.0 wt%, preferably 0.05-3.0 wt%, more preferably 0.10-2.0 wt%, and still more preferably 0.10-1.5 wt% wetting and/or dispersing agent, based on the total weight of the composition.

The aqueous composition of the present invention preferably comprises a foam control agent. Foam control agents are sometimes also referred to as defoamers.

A wide range of foam control agents are commercially available, and may be used in the aqueous composition of the present invention. Representative examples of suitable foam control agents include organic siloxanes, polyethers, polyether-modifed silicones, mineral oils and combinations thereof.

The aqueous composition of the present invention preferably comprises 0.05-3.0 wt%, preferably 0.05-2.5 wt%, more preferably 0.10-2.0 wt%, and still more preferably 0.10-1.5 wt% foam control agent, based on the total weight of the composition.

Optionally the aqueous composition comprises one more colour pigments. Depending on which colour is desired, different types and amounts of colour pigments are preferred. The aqueous composition may comprise at least 2 colour pigments or at least 3 colour pigments. The aqueous composition may comprise 2-8 colour pigments, such as 3-6 colour pigments.

Optionally the aqueous composition comprises $TiO_2$ as a colour pigment. $TiO_2$ is preferred in aqueous compositions where a relatively light colour is desired.

Preferably colour pigments are incorporated into the aqueous composition in a post addition step, more preferably with a multicolour tinting system. This is highly advantageous as it means the aqueous composition can be coloured, as desired, shortly before purchase.

Representative examples of suitable colour pigments include inorganic pigments, organic pigments or a mixture thereof.

Representative examples of suitable inorganic pigments include metal oxides (e.g. titanium dioxide, iron oxides, chrome oxides etc.), Complex Inorganic Colour Pigments (CICPs) (e.g. chromium and nickel titanate, cobalt blue and green aso), cadmium pigments, lead chromates, bismuth vanadate pigments, zinc sulfide, zinc oxide, and carbon black.

Representative examples of classes of suitable organic pigments include azo pigments and polycyclic pigments. Azo pigments include monoazo yellow and orange pigments, disazo pigments, beta-naphthol pigments, naphthol AS pigments, azo pigment lakes, benzimidazolone pigments, disazo condensation pigments, metal complex pigments and isoindolinone and isoindoline pigments. Polycyclic pigments include phtalocyanine pigments (blue & green), quinacridone pigments, perylene and perinone pigments, thioindigo pigments, anthtaquinone pigments, dooxazine pigments, triarylcarbonium pigments, quinopthalone pigments, anthanthrone, pyrazolo quinazolone and diketo-pyrrolo-pyrrol pigments.

Specific examples of non-white coloured pigments include iron oxides, zinc sulfide, chromium oxide green, cadmium pigments, naphthol red, phthalocyanine compounds (e.g. phthalocyanine green, phthalonitrile blue), ultramarine blue azo pigments and carbon black. A huge range of suitable pigments are commercially available.

Preferably the total amount of $TiO_2$ present in the aqueous composition is 0-35wt%, and more preferably 0-30

wt% based on the total weight of the composition.

The amount of colour pigments vary depending on chosen colour. The total amount of colour pigments other than $TiO_2$) present in the aqueous composition may be 0-25 wt%, preferably 0-20 wt% and more preferably 0-17 wt%, based on the total weight of the composition.

The aqueous composition of the present invention optionally comprises fillers. Inorganic or organic fillers may be present. Suitable inorganic and organic fillers are commercially available.

Examples of suitable inorganic fillers include silicas (quartz, diatomaceous earth, perlite, glass spheres, ceramic spheres), silicates (nepheline syenite, talc, kaolin, mica), carbonates (e.g. calcium carbonate, dolomite) and sulphates (e.g. barium sulphate). Inorganic fillers may be used to enhance the optical and/or mechanical properties and/or increase the volume or bulk of an aqueous composition. Typically, inorganic fillers are substantially insoluble in the composition, and are dispersed therein. If present, the average particle size ($D_{50}$) of the inorganic filler is 1.0-300 μm, more preferably 1.0-200 μm and still more preferably 2.0-100 μm, as determined by ISO 13320:2009 using a Malvern Mastersizer 2000.

Alternatively or additionally, the aqueous composition of the present invention may comprise one or more organic fillers. The organic filler is preferably solid organic filler particles, which are different to any solid binder particles present in the composition. Thus any solid organic filler particles present, are added separately to the binder during preparation of the aqueous composition of the invention.

Preferably the solid organic filler particles present in the aqueous composition of the invention are non-expandable and/or non-compressible at atmospheric conditions, i.e. 20 °C and 1 atmosphere. This is beneficial as it means that the filler particles do not change shape and/or size during processing.

The solid organic filler particles preferably comprise, and more preferably consist of poly(meth)acrylate, polystyrene, polyacrylamide, polyurethane, polysiloxane, polyolefin (e.g. polyethylene, polypropylene, polytetrafluoroethylene), polyacrylonitrile, nylon, poly(vinyl ester), and copolymers thereof.

Preferred solid organic filler particles present in the aqueous composition of the present invention are cross-linked.

The solid organic filler particles optionally present in the aqueous composition of the invention are substantially spherical and more preferably spherical.

Preferably the solid organic filler particles have a $D_{50}$ of 1 to 50 μm, more preferably 1 to 40 μm and still more preferably 5-30 μm, as determined by ISO 13320:2009 using a Malvern Mastersizer 2000

An aqueous composition of the present invention preferably comprises 0-70-wt%, preferably 0-65 wt%, more preferably 1-60 wt%, and still more preferably 5-50 wt% filler (i.e. the total of inorganic and organic filler present), based on the total weight of the composition.

The aqueous composition of the present invention optionally comprises a rheology modifier. Still more preferably the composition of the invention comprises a mixture of at least 2 rheology modifiers. The presence of rheology modifier in the compositions of the invention advantageously improves the storage stability, the body of the aqueous composition and the application properties of the coating.

The rheology modifier present in the aqueous compositions of the invention is preferably a polysaccharide rheology modifier, an associative rheology modifier, non-associative rheology modifier, a clay (e.g. organically modified phyllosilicates) or a mixture thereof. Cellulosic rheology modifiers (e.g. hydroxyethyl cellulose) may also be used.

Exemplary polysaccharide rheology modifiers for use in the aqueous compositions include cellulose ethers, micro fibrillated cellulose, alginates, guar gum, locust bean gum and xanthan gum.

Exemplary clay rheology modifiers for use in the aqueous compositions of the invention include kaolin clay, smectite clay, illite clay, chlorite clay, synthetic clay or organically modified clay.

Exemplary associative rheology modifiers for use in the aqueous compositions include non-ionic synthetic associative rheology modifier (niSAT), hydrophobically modified ethoxylated urethanes (HEUR), hydrophobically modified alkali-swellable emulsions (HASE), and styrene-maleic anhydride terpolymers (SMAT). Acidic acrylate copolymers (cross-linked) of ethyl acrylate and methacrylic acid, and acrylic terpolymers (cross-linked) of ethyl acrylate, methacrylic acid, and nonionic urethane surfactant monomer may also be used as associative rheology modifiers. Particularly preferred associative rheology modifiers present in the aqueous composition of the invention are hydrophobically modified ethoxylated urethanes (HEUR) and hydrophobically modified alkali-swellable emulsions (HASE). When one or more suitable associative rheology modifiers are used, the thickening reaction is caused in part by either association between the associative rheology modifier and at least one other particle of the aqueous composition (e.g., a pigment particle or polymer particle) or another associative rheology modifier molecule.

Exemplary non-associative rheology modifiers are alkali-swellable emulsions (ASE).

A preferred aqueous composition of the present invention comprises 0-8.0 wt%, preferably 0.10-6.0 wt%, more preferably 0.15-5.0 wt%, and still more preferably 0.20-4.0 wt% rheology modifier, based on the total weight of the composition.

Other ingredients that may be present in the aqueous composition of the present invention are opacifiers (e.g. Ropaque Ultra E, Celocor 2801 and AQACell HIDE 6399), matting agents (e.g. amorphous silica), waxes, adhesion

promotors, flash rust inhibitors, anticorrosion agents, reinforcing agents, anti-static agents, flame retardant agents, lubricants, plasticizers, cosolvents and coalescent.

Optionally the composition of the present invention comprises light stabilisers (e.g. hindered amine light stabilisers).

Optionally the composition of the present invention comprises UV absorbents.

A preferred aqueous composition of the present invention does not comprise a compound of formula (X):

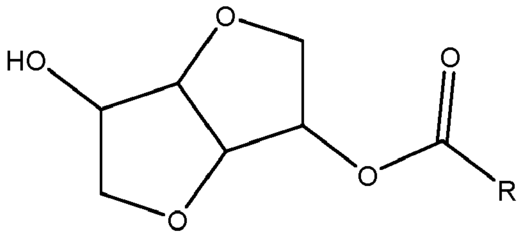

(X)

wherein R is straight-chain or branched saturated alkyl group having 5 to 11, preferably 7 to 9 and particularly preferably 7 carbon atoms or a straight-chain or branched mono or polyunsaturated alkenyl group having 5 to 11, preferably 7 to 9 and particularly preferably 7 carbon atoms.

*Properties of composition*

A preferred aqueous composition of the present invention comprises:

(i) 5-80 wt% binder selected from poly (meth)acrylic, poly styrene (meth)acrylic, poly(ethylene-vinyl acetate), poly vinyl acetate (meth)acrylic, alkyd, polyester, polyurethane, alkyd modified polyurethane, (meth)acrylic modified polyurethane, urethane modified alkyd, (meth)acrylic modified alkyd, alkyd modified poly (meth)acrylic, polycarbonate and combinations thereof, and more preferably poly (meth)acrylic, poly styrene (meth)acrylic, poly(ethylene-vinyl acetate), poly vinyl acetate (meth)acrylic, and combinations thereof;
(ii) >0.1 wt% $C_{5-9}$ acyclic, vicinal diol; and
(iii) water,

wherein said composition has a pH of >7.0 and said wt% is based on the total weight of the composition. Preferably the composition has a pH of 7.5-12.0, more preferably 8.0-12.0, still more preferably 8.0-11.0 and yet more preferably 8.0 to <9.0.

A further preferred aqueous composition of the present invention comprises:

(i) 5-80 wt% binder selected from poly (meth)acrylic, poly styrene (meth)acrylic, poly(ethylene-vinyl acetate), poly vinyl acetate (meth)acrylic, alkyd, polyester, polyurethane, alkyd modified polyurethane, (meth)acrylic modified polyurethane, urethane modified alkyd, (meth)acrylic modified alkyd, alkyd modified poly (meth)acrylic, polycarbonate and combinations thereof, and more preferably poly (meth)acrylic, poly styrene (meth)acrylic, poly(ethylene-vinyl acetate), poly vinyl acetate (meth)acrylic, and combinations thereof;
(ii) >0.1 wt% $C_{5-9}$ acyclic, vicinal diol;
(iii) water, and
(x) <0.01wt%, preferably <0.0015 wt%, more preferably <0.0001 wt% wet-state preservative

wherein said composition has a pH of >7.0 and said wt% is based on the total weight of the composition. Preferably the composition has a pH of 7.5-12.0, more preferably 8.0-12.0, still more preferably 8.0-11.0 and yet more preferably 8.0 to <9.0.

A further preferred aqueous composition of the present invention comprises:

(i) 5-80 wt% binder selected from poly (meth)acrylic, poly styrene (meth)acrylic, poly(ethylene-vinyl acetate), poly vinyl acetate (meth)acrylic, alkyd, polyester, polyurethane, alkyd modified polyurethane, (meth)acrylic modified polyurethane, urethane modified alkyd, (meth)acrylic modified alkyd, alkyd modified poly (meth)acrylic, polycarbonate and combinations thereof, and more preferably poly (meth)acrylic, poly styrene (meth)acrylic, poly(ethylene-vinyl acetate), poly vinyl acetate (meth)acrylic, and combinations thereof;
(ii) >0.1 wt% $C_{5-9}$ acyclic, vicinal diol;
(iii) water, and

(x) 0.0001-0.20 wt%, preferably 0.0015-0.15 wt%, more preferably 0.01-0.10 wt% and still more preferably 0.01-0.09 wt% wet-state preservative

wherein said composition has a pH of >7.0 and said wt% is based on the total weight of the composition. Preferably the composition has a pH of 7.5-12.0, more preferably 8.0-12.0, still more preferably 8.0-11.0 and yet more preferably 8.0 to <9.0.

A further preferred aqueous composition of the present invention comprises:

(i) 5-80 wt% binder selected from poly (meth)acrylic, poly styrene (meth)acrylic, poly(ethylene-vinyl acetate), poly vinyl acetate (meth)acrylic, alkyd, polyester, polyurethane, alkyd modified polyurethane, (meth)acrylic modified polyurethane, urethane modified alkyd, (meth)acrylic modified alkyd, alkyd modified poly (meth)acrylic, polycarbonate and combinations thereof, and more preferably poly (meth)acrylic, poly styrene (meth)acrylic, poly(ethylene-vinyl acetate), poly vinyl acetate (meth)acrylic, and combinations thereof;
(ii) >0.1 wt% $C_{5-9}$ acyclic, vicinal diol;
(iii) water,
(iv) pH modifier; and
(x) wet-state preservative and/or (xi) dry film preservative,

wherein said composition has a pH of >7.0 and said wt% is based on the total weight of the composition. Preferably the composition has a pH of 7.5-12.0, more preferably 8.0-12.0, still more preferably 8.0-11.0 and yet more preferably 8.0 to <9.0.

A preferred aqueous composition of the present invention has a density of 0.8-2.0, preferably 0.9-1.8 and more preferably 1.0-1.6 g/cm$^3$.

A preferred aqueous composition of the present invention, preferably for interior use, has a calculated VOC content, e.g. preferably a calculated VOC content according to the method set out in the examples herein, of 0-150 g/L, preferably 0-80 g/L and more preferably 0-30 g/L.

A preferred aqueous composition of the present invention, preferably for exterior use, has a calculated VOC content, e.g. preferably a calculated VOC content according to the method set out in the examples herein, of 0-200 g/L, preferably 0-130 g/L and more preferably 0-80 g/L

A preferred aqueous composition of the present invention has a vol% solids of 10-60 %, preferably 20-55 % and more preferably 30-50 %.

A preferred aqueous composition of the present invention has a shelf-life of 6 months, preferably 12 months, more preferably 24 months and still more preferably 36 months, e.g. at 23 °C and 50%RH.

A preferred aqueous composition of the present invention is resistant to bacteria, preferably as determined by the method set out in the examples here. The aqueous composition of the invention is resistant to gram positive bacteria and gram negative bacteria. The results against gram negative bacteria are particularly strong.

The use of a $C_{5-9}$ acyclic, vicinal diol as an agent to improve the microbial resistancein an aqueous composition comprising a binder, wherein said $C_{5-9}$ acyclic, vicinal diol has a concentration of >0.1 wt%, based on the total weight of the composition, and said composition has a pH of >7.0 forms another aspect of the invention.

A preferred aqueous composition of the present invention is a coating composition (such as paint, primer, varnish, stain and lacquer), putty, plaster, sealant, emulsion or dispersion, and more preferably a coating composition. Coating compositions may be for interior or exterior use. One preferred aqueous composition of the present invention is an interior coating composition. Another preferred aqueous composition of the present invention is an exterior coating composition. A preferred aqueous composition of the present invention is not a pharmaceutical product, dermological product or cosmetic product.

Manufacture and containers

The present invention also relates to a method of preparing the composition as hereinbefore described wherein the components, i.e. binder, >0.1 wt% $C_{5-9}$ acyclic, vicinal diol and water present in the composition are mixed. Any conventional production method may be used.

The composition as described herein may be prepared in a suitable concentration for use, e.g. in brush, rolling or spray application. Alternatively, the composition may be a concentrate. In this case, further solvent, typically water, is added to the composition described herein to form the final aqueous composition. After mixing, and optionally after addition of solvent, e.g. water, the aqueous composition is preferably filled into a container. Suitable containers include cans, drums and tanks.

Optionally the composition may be tinted with pigments. In this case, the aqueous composition of the present invention may be considered to be a base composition that one or more tinters are added to. Addition of tinters to the

composition may be one way by which microorganisms such as bacteria may be introduced into the composition, but the presence of the vicinal diol described herein prevents it from being infected by bacteria.

The aqueous composition is preferably supplied as a one-pack. Thus the composition is preferably supplied in a ready-mixed or ready to use form. Optionally water and/or solvent may be added prior to application.

Coatings and Substrates

The present invention also relates to a method of coating a substrate, wherein said method comprises:

(i) applying an aqueous composition as hereinbefore described to at least one surface of the substrate; and
(ii) drying and/or curing said composition to form said coating.

Application of the composition may be accomplished by any convenient means, e.g. via painting with a brush, roller or spray application, onto the surface or article. The composition, once dried and/or cured, forms a coating or film. A coating on a substrate, wherein said coating is formed from an aqueous composition as hereinbefore described forms another aspect of the invention.

The coating of the present invention therefore comprises the composition as hereinbefore described but with little, or no, water content or organic solvent. Alternatively defined, the coating or film of the present invention is derived from or obtainable from (e.g. obtained from) the composition as hereinbefore defined by drying and/or curing. The coating or film formed preferably has a dry film thickness per coat of 10-700 μm, more preferably 15-600 μm and still more preferably 20-200 μm.

Suitable substrates that may be coated with the composition herein described include organic substrates (such as wood, wood-based materials (e.g. MDF, chipboard board, parquet floor)), mineral substrates (such as masonry, block work (e.g. bricks, cementitious hollow blocks, autoclaved aereated (AAC) concrete blocks), concrete, glass reinforced concrete, rendered surfaces (e.g. putty, stuccos), plaster (e.g. cement plaster, gypsum plaster, lime plasters, plaster of paris, plaster with organic binder), dry wall (e.g. gypsum board, cement fibre boards), stone, ceramics, tiles and glass), metal, plastic (such as vinyl or linoleum floor), natural and synthetic fibers, leather, paper (such as wallpaper). A coated substrate, wherein said coating is formed from an aqueous composition as hereinbefore described forms another aspect of the invention.

Representative examples of surfaces or articles that may be coated with the aqueous composition described herein include wall, ceiling, decking, cladding, floor, fencing, door frames, window frames, exposed beams, columns, soffits, and furniture.

The composition of the present invention may be applied directly to a surface of a substrate. Use of an aqueous composition as described herein to form a coating on a substrate represents another aspect to the invention.

The composition may be applied directly to a surface of a substrate as a single coat or a plurality of coats, e.g. two, three or four coats. The surface may be coated or non-coated. The composition may be a primer. Alternatively the aqueous composition of the present invention may be applied in a coating system.

The invention will now be described by way of the following non-limiting examples.

EXAMPLES

**Materials**

The compounds and polymers used in the examples were all purchased commercially. The opacifier employed had a 30 wt% solid content in water. BIT means 1,2-benzisothiazol-3(2H)-one. CIT means 5-chloro-2-methyl-1,2-thiazol-3(2H)-one. DTBMA means 2,2'-dithiobis[N-methylbenzamide].

The diols and binders employed in the examples are summarised in Tables 1 and 2 below.

Table 1 - Diols employed in the examples

| | **Name** | **Boiling point (°C)** | **Density (g/cm$^3$)** | **CAS no.** |
|---|---|---|---|---|
| Diol 1 | 1,2-propanediol | 187 | 1.04 | 57-55-6 |
| Diol 2 | 1,2-butanediol | 191 | 1.00 | 584-03-2 |
| Diol 3 | 1,2-hexanediol | 228 | 0.95 | 6920-22-5 |
| Diol 4 | 1,2-heptanediol | 237 | 0.94 | 3710-31-4 |
| Diol 5 | 1,2-octanediol | 267 | 0.93 | 1117-86-8 |

(continued)

| | Name | Boiling point (°C) | Density (g/cm$^3$) | CAS no. |
|---|---|---|---|---|
| Diol 6 | 1,2-decanediol | 279 | 0.94 | 1119-86-4 |
| Diol 7 | 1,7-heptanediol | 262 | 0.95 | 629-30-1 |
| Diol 8 | 1,8-octanediol | 172 | 1.05 | 629-41-4 |
| Diol 9 | 1,4-cyclohexandiol | 252 | 1.00 | 556-48-9 |
| Diol 10 | 1,5-hexanediol | 90 | 0.98 | 928-40-5 |
| Diol 11 | 2,5-hexanediol | 217 | 0.96 | 2935-44-6 |
| Diol 12 | 1,6-hexanediol | 250 | 0.96 | 629-11-8 |

Table 2 - Binders employed in the examples (NA = not available)

| | Type | MFFT (°C) | Tg (°C) | Particle size, average diameter (nm) | Solid content (wt% in water) |
|---|---|---|---|---|---|
| Polymer dispersion 1 | Poly(ethylene-vinyl acetate) | 0 | 12 | 370 | 53 |
| Polymer dispersion 2 | Poly (meth)acrylic | < 5 | NA | 100 | 50 |
| Polymer dispersion 3 | Poly styrene (meth)acrylic | 7 | NA | 100 | 47 |

**Test Methods**

- **pH measurements**
  The pH of the compositions was measured with a pH meter (InoLab pH7110) and a precision electrode with temperature sensor (WTW SenTix 81). The pH meter was calibrated with buffer solution with pH 7.0 and pH 10.0. The sample temperature for pH measurements was 23 ±1 °C.

- **Determination of the density of the compositions**
  The density of the compositions was determined according to ISO 2811-1 :2016 using a metal pycnometer at 23°C. The measurement was done on samples in a 100 ml container.

- **Calculation of Vol% solids**
  The following equations were used to calculate vol% solids:

$$\text{Volume} = (\text{weight} / \text{density})$$

$$\text{Vol\% solid} = \frac{\sum \text{Vol pigments and filler} + \sum \text{Vol solid binder} + \sum \text{Vol solid additives}}{\textit{Total wet paint volume}} * 100$$

- Calculation of Volatile Organic Compounds (VOC)

$$\text{VOC [g/L]} = \frac{\text{total weight VOC [g]}}{(\textit{weight paint / measured density paint})\ [\text{L}]}$$

- **Test method to assess microbiological quality of the aqueous composition**
  This test was done to ensure that the aqueous compositions are not infected before being evaluated for resistance to bacterial growth in the wet state.

Tryptone Soya Agar (TSA) with 2,3,5-triphenyltetrazolium chloride (TTC) was used to determine total bacteria in the sample (composition) according to the test method described below.

A sterile cotton swab was immersed in the aqueous composition, and excess material was removed by pressing the cotton swab against the inside of the sample container. The sample was streaked over the agar surface, evenly distributing the material on the agar. TSA plates were incubated at 30°C for 72 hours before evaluation.

The number of colony forming units (cfu) was determined visually, and the plates were scored according to the rating in Table 3. The table indicates if the microbiological result was acceptable or not.

Table 3. Scoring of bacteria

| Score | Growth on agar plate | cfu/g in sample | Evaluation of result |
|---|---|---|---|
| 0 | No growth | < $10^2$ | OK |
| 1 | Minimal growth: 1-10 colonies on agar plate | $10^2$ - $10^3$ | OK |
| 2 | Slight growth: maximum 100 colonies on agar plate | $10^3$ - $10^4$ | Not acceptable |
| 3 | Medium growth: maximum 300-400 colonies on agar plate | $10^4$ - $10^5$ | Not acceptable |
| 4 | Equal growth: possible to differentiate single colonies, more than 400 colonies on agar plates | $10^5$ - $10^6$ | Not acceptable |
| 5 | Heavy growth: not countable, but agar plate is not fully grown | $10^6$ - $10^7$ | Not acceptable |
| 6 | Heavy growth: no visible single colonies on agar plate | > $10^7$ | Not acceptable |

All aqueous compositions used in the examples had an acceptable microbiological quality.

- **Test method to evaluate resistance to bacterial growth in the wet state**
  Evaluation of resistance of aqueous compositions to bacterial growth in the wet state was assessed as described below. The method is based on IBRG P / 015 / (March 2015) "A Method for Evaluating the Resistance of Aqueous Based Paints to Bacterial Growth in the Wet State".

Sample preparation

100 g of aqueous composition was weighed in sterile containers with screw caps.

Preparation of inoculum

The inoculum used in the test was a mixture of bacteria. A total of 8 different gram-negative rod bacteria was used; *Pseudomonas paucimobilis, Aeromonas hydrophila, Pseudomonas putida* and several *Pseudomonas aeruginosa* species.

Three days before every inoculation, a small aliquot of the bacteria was taken from -80 °C and transferred to tubes with 5 ml tryptic soy broth (TSB). The TSB with bacteria were further incubated in a shake-incubator at 30°C and 70 rpm for 36-48 hours. Following this, 3 ml of the culture in the tube with TSB were transferred to approximately 50 ml TSB in 100 ml Erlenmeyer flask closed with a cotton plug. The flask was further incubated in a shake-incubator at 30°C and 70 rpm for 24-36 hours. These cultures were used as the inoculum in the test.

On the day of inoculation, all bacterial cultures were diluted with sterile peptone water and adjusted to achieve an optical density at 600 nm that corresponds to $1 \times 10^8$-$5 \times 10^8$ cfu/ml. Disposable cuvettes in optical polystyrene and VWR® UV-1600PC, UV/Visible Spectrophotometer was used for this purpose.

Equal volumes of each bacterial culture were mixed in a sterile bottle to obtain a mixed inoculum.

A total viable count test was performed to verify cfu/ml: 1 ml of diluted samples were added to petri plates and molten agar medium was poured over. The plates were swirled quickly to properly mix the sample with the medium. The mixed medium was allowed to solidify and was incubated at 30°C for five days. Following the incubation, the numbers of isolated colonies were counted.

Inoculation

Each 100 g aqueous composition was inoculated with 1 ml mixed inoculum once per week for up to 10 consecutive weeks. The microorganisms were mixed well into the sample using sterile inoculating loops. The samples were incubated at room temperature during the test. If the sample failed, no additional inoculations were made.

Streak out of samples

Six days after each inoculation, a small amount (approximately 10 μl) of the composition was streaked onto TSA agar plates with TTC using sterile inoculating loops. Excess materials were removed by pressing the inoculation loop against the inside of the sample container. Each composition was streaked in duplicate, one streak-out on each side of a line bisecting the plate.

The agar plates with streak outs were incubated at 30 °C for 5 days before the number of colony forming units (cfu) was determined visually, and the plates were scored according to the scale below.

Growth of microorganisms was evaluated using the following scale:

0 = no growth (no visible colonies)
1 = 1-10 colonies
2 = 11-100 colonies
3 = 101-1000 colonies
4 = >1000 colonies (or confluent growth)

The composition fails the test, and considered to be infected with bacteria, if its score was ≥ 3.

**Preparation of compositions**

The components of the compositions were mixed in the proportions set out in the Tables below, wherein amounts are given in wt% (unless otherwise specified). A number of comparative examples were also prepared.

The compositions were prepared using a SpeedMixer (DAC 600.1 FVZ). Titanium dioxide and inorganic filler were dispersed in a mill base by adding water, foam control agent, wetting and dispersing agents. Rheology modifiers were incorporated for optimal dispersion conditions. The compositions were dispersed to a fineness of grind of maximum 40 μm. The remaining ingredients, including polymer dispersion were then added into the same SpeedMixer container and mixed at lower speed.

Liquid diols were added into let-down stage and solid diols were added into the mill base.

No wet-state preservatives were added to any of the examples or comparative examples. The low concentrations of wet-state preservatives present were due to their presence in some of the raw materials employed.

**Results**

The results in table 4 show that compositions of the invention comprising three different C6, C7 and C8 vicinal diols in a concentration of 0.5 wt% or 1.0 wt% have resistance to bacterial growth in the wet state. The results for examples 2, 4 and 6, where 1.0 wt% C6-8 vicinal diol was employed have the highest levels of bacterial resistance. The bacterial resistance is achieved with very low concentrations of wet state preservatives.

Table 4: Examples of the invention

| **Ingredients (wt%)** | **Ex 1** | **Ex 2** | **Ex 3** | **Ex 4** | **Ex 5** | **Ex 6** |
|---|---|---|---|---|---|---|
| Polymer dispersion 1 | 32.8 | 32.8 | 32.8 | 32.8 | 32.8 | 32.8 |
| $TiO_2$ | 20.8 | 20.8 | 20.8 | 20.8 | 20.8 | 20.8 |
| Inorganic fillers | 15.1 | 15.1 | 15.1 | 15.1 | 15.1 | 15.1 |
| Opacifier | 6.6 | 6.6 | 6.6 | 6.6 | 6.6 | 6.6 |
| Wetting and dispersing agents | 0.62 | 0.62 | 0.62 | 0.62 | 0.62 | 0.62 |
| Foam control agents | 0.43 | 0.43 | 0.43 | 0.43 | 0.43 | 0.43 |
| Rheology modifiers | 2.5 | 2.5 | 2.5 | 2.5 | 2.5 | 2.5 |
| NaOH aq. (10%) | 1.5 | 1.5 | 1.5 | 1.5 | 1.5 | 1.5 |
| Water | 18.8 | 18.3 | 18.8 | 18.3 | 18.8 | 18.3 |
| Diol 3 | 0.5 | 1.0 | | | | |
| Diol 4 | | | 0.5 | 1.0 | | |
| Diol 5 | | | | | 0.5 | 1.0 |

(continued)

| Ingredients (wt%) | Ex 1 | Ex 2 | Ex 3 | Ex 4 | Ex 5 | Ex 6 |
|---|---|---|---|---|---|---|
| Total | 100 | 100 | 100 | 100 | 100 | 100 |
| **Paint properties** | | | | | | |
| pH | 8.9 | 8.9 | 8.9 | 8.9 | 8.9 | 8.9 |
| Density (kg/dm$^3$) | 1.38 | 1.38 | 1.38 | 1.38 | 1.38 | 1.38 |
| Calculated VOC (g/L) | 7 | 14 | 7 | 14 | < 1 | < 1 |
| Vol % solids | 40.7 | 40.7 | 40.7 | 40.7 | 40.7 | 40.7 |
| Amount wet state preservatives (introduced from raw materials) (wt%) | 0.0019 BIT, 0.0019 DTBM A | 0.0019 BIT, 0.0019 DTBM A | 0.0019 BIT, 0.0019 DTBM A | 0.0019 BIT, 0.0019 DTBM A | 0.0019 BIT, 0.0019 DTBM A | 0.0019 BIT, 0.0019 DTBM A |
| **Microbiological test** | | | | | | |
| Number of inoculations needed to infect the paint with bacteria | 5 | 10 | 6 | >10* | 4 | 8 |
| * the sample was not infected during the 10 inoculations. | | | | | | |

In contrast, comparative examples comprising vicinal diols of shorter (C3, C4) or longer (C10) chain lengths did not provide any resistance to bacterial growth in the wet state (Table 5). Comparative examples comprising non-vicinal diols also did not provide any resistance to bacterial growth in the wet state (Table 6). This includes CE8-11 which contain C7 or C8 non-vicinal diols.

Table 5. Comparative examples with diols having a different chain length.

| Ingredients (wt%) | CE 1 | CE 2 | CE 3 | CE 4 | CE 5 | CE 6 | CE 7 |
|---|---|---|---|---|---|---|---|
| Polymer dispersion 1 | 32.8 | 32.8 | 32.8 | 32.8 | 32.8 | 32.8 | 32.8 |
| $TiO_2$ | 20.8 | 20.8 | 20.8 | 20.8 | 20.8 | 20.8 | 20.8 |
| Inorganic fillers | 15.1 | 15.1 | 15.1 | 15.1 | 15.1 | 15.1 | 15.1 |
| Opacifier | 6.6 | 6.6 | 6.6 | 6.6 | 6.6 | 6.6 | 6.6 |
| Wetting and dispersing agents | 0.62 | 0.62 | 0.62 | 0.62 | 0.62 | 0.62 | 0.62 |
| Foam control agents | 0.43 | 0.43 | 0.43 | 0.43 | 0.43 | 0.43 | 0.43 |
| Rheology modifiers | 2.5 | 2.5 | 2.5 | 2.5 | 2.5 | 2.5 | 2.5 |
| NaOH aq. (10 wt%) | 1.5 | 1.5 | 1.5 | 1.5 | 1.5 | 1.5 | 1.5 |
| Water | 19.3 | 18.8 | 18.3 | 18.8 | 18.3 | 18.8 | 18.3 |
| Diol 1 | | 0.5 | 1.0 | | | | |
| Diol 2 | | | | 0.5 | 1.0 | | |
| Diol 6 | | | | | | 0.5 | 1.0 |
| Total | 100 | 100 | 100 | 100 | 100 | 100 | 100 |
| **Paint properties** | | | | | | | |
| pH | 9.0 | 8.9 | 8.9 | 8.9 | 8.9 | 8.9 | 8.9 |
| Density (kg/dm$^3$) | 1.38 | 1.38 | 1.38 | 1.38 | 1.38 | 1.38 | 1.38 |
| Calculated VOC (g/L) | < 1 | 7 | 14 | 7 | 14 | < 1 | < 1 |
| Vol % solids | 40.7 | 40.7 | 40.7 | 40.7 | 40.7 | 40.7 | 40.7 |

(continued)

| Paint properties | | | | | | | |
|---|---|---|---|---|---|---|---|
| Amount wet state preservatives (introduced from raw materials) (wt%) | 0.001 9 BIT, 0.001 9 DTBM A | 0.001 9 BIT, 0.001 9 DTBM A | 0.001 9 BIT, 0.001 9 DTBM A | 0.001 9 BIT, 0.001 9 DTBM A | 0.001 9 BIT, 0.001 9 DTBM A | 0.001 9 BIT, 0.001 9 DTBM A | 0.001 9 BIT, 0.001 9 DTBM A |
| **Microbiological test** | | | | | | | |
| Number of inoculations needed to infect the paint with bacteria | 1 | 1 | 1 | 1 | 1 | 1 | 1 |

Table 6. Comparative examples with diols in non-vicinal position and a cyclic diol.

| Ingredients (wt%) | CE 8 | CE 9 | CE 10 | CE 11 | CE 12 | CE 13 |
|---|---|---|---|---|---|---|
| Polymer dispersion 1 | 32.8 | 32.8 | 32.8 | 32.8 | 32.8 | 32.8 |
| $TiO_2$ | 20.8 | 20.8 | 20.8 | 20.8 | 20.8 | 20.8 |
| Inorganic fillers | 15.1 | 15.1 | 15.1 | 15.1 | 15.1 | 15.1 |
| Opacifier | 6.6 | 6.6 | 6.6 | 6.6 | 6.6 | 6.6 |
| Wetting and dispersing agents | 0.62 | 0.62 | 0.62 | 0.62 | 0.62 | 0.62 |
| Foam control agents | 0.43 | 0.43 | 0.43 | 0.43 | 0.43 | 0.43 |
| Rheology modifiers | 2.5 | 2.5 | 2.5 | 2.5 | 2.5 | 2.5 |
| NaOH aq. (10 wt%) | 1.5 | 1.5 | 1.5 | 1.5 | 1.5 | 1.5 |
| Water | 18.8 | 18.3 | 18.8 | 18.3 | 18.8 | 18.3 |
| Diol 7 | 0.5 | 1.0 | | | | |
| Diol 8 | | | 0.5 | 1.0 | | |
| Diol 9 | | | | | 0.5 | 1.0 |
| Total | 100 | 100 | 100 | 100 | 100 | 100 |
| **Paint properties** | | | | | | |
| pH | 8.9 | 8.9 | 8.9 | 8.9 | 8.9 | 8.9 |
| Density ($kg/dm^3$) | 1.38 | 1.38 | 1.38 | 1.38 | 1.38 | 1.38 |
| Calculated VOC (g/L) | < 1 | < 1 | 7 | 14 | < 1 | < 1 |
| Vol % solids | 40.7 | 40.7 | 40.7 | 40.7 | 40.7 | 40.7 |
| Amount wet state preservatives (introduced from raw materials) (wt%) | 0.0019 BIT, 0.0019 DTBMA | 0.0019 BIT, 0.0019 DTBMA | 0.0019 BIT, 0.0019 DTBM A | 0.0019 BIT, 0.0019 DTBM A | 0.0019 BIT, 0.0019 DTBM A | 0.0019 BIT, 0.0019 DTBM A |
| **Microbiological test** | | | | | | |
| Number of inoculations needed to infect the paint with bacteria | 1 | 1 | 1 | 1 | 1 | 1 |

Two further comparisons were carried out between a composition of the invention comprising 1,2-heptanediol, and a number of comparative examples comprising C6, C7 or C8 non-vicinal diols (Tables 7 and 8). The position of the hydroxy groups in the non-vicinal diols was varied in the comparative examples. In the first comparison (Table 7) the binder was poly(ethylene-vinyl acetate). In the second comparison (Table 8) the binder was poly (meth)acrylic. The compositions in Tables 7 and 8 only contain ingredients which are preservative free (traces of preservatives might be present hence the <0.0001 wt% limit).

The results in both Tables 7 and 8 show that whilst the composition of the invention has resistance to bacterial growth in the wet state at a pH of 9.0 and using preservative free ingredients, none of the comparative examples show resistance. This demonstrates the importance of the presence of vicinal hydroxy groups in the diol in achieving resistance to bacterial growth in the wet state. The same trend occurs regardless of the binder type.

Table 7. Comparative examples with non-vicinal diols and inventive example with 1,2-heptanediol.

| **Ingredients (wt%)** | **Ex 7** | **CE 14** | **CE 15** | **CE 16** | **CE 17** | **CE 18** |
|---|---|---|---|---|---|---|
| Polymer dispersion 1 | 32.8 | 32.8 | 32.8 | 32.8 | 32.8 | 32.8 |
| $TiO_2$ | 20.8 | 20.8 | 20.8 | 20.8 | 20.8 | 20.8 |
| Inorganic fillers | 15.1 | 15.1 | 15.1 | 15.1 | 15.1 | 15.1 |
| Opacifier | 6.6 | 6.6 | 6.6 | 6.6 | 6.6 | 6.6 |
| Wetting and dispersing agents | 0.62 | 0.62 | 0.62 | 0.62 | 0.62 | 0.62 |
| Foam control agents | 0.43 | 0.43 | 0.43 | 0.43 | 0.43 | 0.43 |
| Rheology modifiers | 2.5 | 2.5 | 2.5 | 2.5 | 2.5 | 2.5 |
| NaOH aq. (10 wt%) | 1.5 | 1.5 | 1.5 | 1.5 | 1.5 | 1.5 |
| Water | 18.3 | 18.3 | 18.3 | 18.3 | 18.3 | 18.3 |
| Diol 4 | 1.0 | | | | | |
| Diol 7 | | | | | 1.0 | |
| Diol 8 | | | | | | 1.0 |
| Diol 10 | | 1.0 | | | | |
| Diol 11 | | | 1.0 | | | |
| Diol 12 | | | | 1.0 | | |
| **Total** | **100** | **100** | **100** | **100** | **100** | **100** |
| | | | | | | |
| **Paint properties** | | | | | | |
| pH | 9.0 | 9.0 | 9.0 | 9.0 | 9.0 | 9.0 |
| Density (kg/$dm^3$) | 1.38 | 1.38 | 1.38 | 1.38 | 1.38 | 1.38 |
| Calculated VOC (g/L) | 14 | 14 | 14 | 14 | < 1 | 14 |
| Vol % solids | 40.7 | 40.7 | 40.7 | 40.7 | 40.7 | 40.7 |
| Amount wet state preservatives (introduced from raw materials) (wt%) | <0.000 1 | <0.000 1 | <0.000 1 | <0.000 1 | <0.000 1 | <0.000 1 |
| **Microbiological test** | | | | | | |
| Number of inoculations needed to infect the paint with bacteria | >8* | 1 | 1 | 1 | 1 | 1 |
| * the sample was not infected during the 8 inoculations. | | | | | | |

Table 8. Comparative examples with non-vicinal diols and inventive example with 1,2-heptanediol.

| **Ingredients (wt%)** | **Ex 8** | **CE 19** | **CE 20** | **CE 21** | **CE 22** | **CE 23** |
|---|---|---|---|---|---|---|
| Polymer dispersion 2 | 25.5 | 25.5 | 25.5 | 25.5 | 25.5 | 25.5 |
| $TiO_2$ | 22.2 | 22.2 | 22.2 | 22.2 | 22.2 | 22.2 |
| Inorganic fillers | 19.2 | 19.2 | 19.2 | 19.2 | 19.2 | 19.2 |
| Opacifier | 5.6 | 5.6 | 5.6 | 5.6 | 5.6 | 5.6 |
| Wetting and dispersing agents | 1.0 | 1.0 | 1.0 | 1.0 | 1.0 | 1.0 |

(continued)

| Ingredients (wt%) | Ex 8 | CE 19 | CE 20 | CE 21 | CE 22 | CE 23 |
|---|---|---|---|---|---|---|
| Foam control agents | 0.73 | 0.73 | 0.73 | 0.73 | 0.73 | 0.73 |
| Rheology modifiers | 1.6 | 1.6 | 1.6 | 1.6 | 1.6 | 1.6 |
| NaOH aq. (10 wt%) | 0.9 | 0.9 | 0.9 | 0.9 | 0.9 | 0.9 |
| Water | 22.3 | 22.3 | 22.3 | 22.3 | 22.3 | 22.3 |
| Diol 4 | 1.0 | | | | | |
| Diol 7 | | | | | 1.0 | |
| Diol 8 | | | | | | 1.0 |
| Diol 10 | | 1.0 | | | | |
| Diol 11 | | | 1.0 | | | |
| Diol 12 | | | | 1.0 | | |
| **Total** | **100** | **100** | **100** | **100** | **100** | **100** |
| **Paint properties** | | | | | | |
| pH | 9.0 | 9.0 | 9.0 | 9.0 | 9.0 | 9.0 |
| Density (kg/ $dm^3$) | 1.44 | 1.44 | 1.44 | 1.44 | 1.44 | 1.44 |
| Calculated VOC (g/L) | 14 | 14 | 14 | 14 | < 1 | 14 |
| Vol % solids | 39.2 | 39.2 | 39.2 | 39.2 | 39.2 | 39.2 |
| Amount wet state preservatives (introduced from raw materials) (wt%) | <0.000 1 | <0.000 1 | <0.000 1 | <0.000 1 | <0.000 1 | <0.000 1 |
| **Microbiological test** | | | | | | |
| Number of inoculations needed to infect the paint with bacteria | >8* | 1 | 1 | 1 | 1 | 1 |
| * the sample was not infected during the 8 inoculations. | | | | | | |

Two compositions of the invention comprising 0.5 and 1.0 wt% 1,2-hexanediol were compared to comparative examples comprising 0 and 0.1 wt% 1,2-hexanediol (Table 9). The results show that whilst the compositions of the invention have resistance to bacterial growth at pH 8.4-8.5 in the presence of low concentrations of wet state preservatives, the comparative compositions do not have resistance to bacterial growth.

This shows that more than 0.1 wt% of vicinal diol is required to achieve resistance to bacterial growth in the wet state.

Table 9 Different amount of diol.

| Ingredients (wt%) | CE 24 | CE 25 | Ex 9 | Ex 10 |
|---|---|---|---|---|
| Polymer dispersion 3 | 40.3 | 40.3 | 40.3 | 40.3 |
| $TiO_2$ | 23.7 | 23.7 | 23.7 | 23.7 |
| Inorganic fillers | 8.7 | 8.7 | 8.7 | 8.7 |
| Wetting and dispersing agents | 1.72 | 1.72 | 1.72 | 1.72 |
| Foam control agents | 0.6 | 0.6 | 0.6 | 0.6 |
| Rheology modifiers | 1.94 | 1.94 | 1.94 | 1.94 |
| Water | 16.43 | 16.33 | 15.93 | 15.43 |
| Texanol (2,2,4-trimethyl-1,3-pentanediol monoisobutyrate) | 0.72 | 0.72 | 0.72 | 0.72 |
| Monopropylene glycol | 5.85 | 5.85 | 5.85 | 5.85 |

(continued)

| Ingredients (wt%) | CE 24 | CE 25 | Ex 9 | Ex 10 |
|---|---|---|---|---|
| Diol 3 | 0 | 0.1 | 0.5 | 1.0 |
| **Total** | **100** | **100** | **100** | **100** |
| | | | | |
| **Paint properties** | | | | |
| pH | 8.5 | 8.4 | 8.5 | 8.5 |
| Density (kg/dm$^3$) | 1.34 | 1.34 | 1.34 | 1.34 |
| Calculated VOC (g/L) | 88 | 89 | 95 | 101 |
| Vol % solids | 37.0 | 37.0 | 37.0 | 37.0 |
| Amount wet state preservatives (introduced from raw materials) (wt%) | 0.012 BIT. 0.0004 CIT | 0.012 BIT. 0.0004 CIT | 0.012 BIT. 0.0004 CIT | 0.012 BIT. 0.0004 CIT |
| **Microbiological test** | | | | |
| Number of inoculations needed to infect the paint with bacteria | 1 | 1 | >8* | >8* |
| * the sample was not infected during the 8 inoculations. | | | | |

Four compositions of the invention were prepared, two based on poly(ethylenevinyl acetate) and two based on poly (meth)acrylic (Table 10). Each composition comprised a mixture of two different vicinal diols in a total concentration of 1.0 wt%. The compositions in Table 10 only contain ingredients which are preservative free (traces of preservatives might be present hence the <0.0001 wt% limit). All of the compositions of the invention demonstrated resistance to bacterial growth in the wet state at a pH of 9.0 and when preservative free ingredients were used. In contrast, the comparative examples lacking any vicinal diols did not show any resistance to bacterial growth in the wet state.

Table 10. Mix of different vicinal diols.

| Ingredients (wt%) | Ex 11 | Ex 12 | Ex 13 | Ex 14 | CE 26 | CE 27 |
|---|---|---|---|---|---|---|
| Polymer dispersion 1 | 32.8 | 32.8 | | | 32.8 | |
| Polymer dispersion 2 | | | 25.5 | 25.5 | | 25.5 |
| $TiO_2$ | 20.8 | 20.8 | 22.2 | 22.2 | 20.8 | 22.2 |
| Inorganic fillers | 15.1 | 15.1 | 19.2 | 19.2 | 15.1 | 19.2 |
| Opacifier | 6.6 | 6.6 | 5.6 | 5.6 | 6.6 | 5.6 |
| Wetting and dispersing agents | 0.62 | 0.62 | 1.0 | 1.0 | 0.62 | 1.0 |
| Foam control agents | 0.43 | 0.43 | 0.73 | 0.73 | 0.43 | 0.73 |
| Rheology modifiers | 2.5 | 2.5 | 1.6 | 1.6 | 2.5 | 1.6 |
| NaOHaq.(10wt%) | 1.5 | 1.5 | 0.9 | 0.9 | 1.5 | 0.9 |
| Water | 18.6 | 18.6 | 22.3 | 22.3 | 19.7 | 23.3 |
| Diol 3 | 0.5 | 0.5 | 0.5 | | | |
| Diol 4 | 0.5 | | | 0.5 | | |
| Diol 5 | | 0.5 | 0.5 | 0.5 | | |
| **Total** | 100 | 100 | 100 | 100 | 100 | 100 |
| | | | | | | |
| **Paint properties** | | | | | | |
| pH | 9.0 | 9.0 | 9.0 | 9.0 | 9.0 | 9.0 |
| Density (kg/dm$^3$) | 1.38 | 1.38 | 1.44 | 1.44 | 1.38 | 1.44 |

(continued)

| Paint properties | | | | | | |
|---|---|---|---|---|---|---|
| Calculated VOC (g/L) | 14 | 7 | 7 | 7 | < 1 | < 1 |
| Vol % solids | 40.7 | 40.7 | 39.2 | 39.2 | 40.7 | 39.2 |
| Amount wet state preservatives (introduced from raw materials) (wt%) | <0.000 1 | <0.000 1 | <0.000 1 | <0.000 1 | <0.000 1 | <0.000 1 |
| **Microbiological test** | | | | | | |
| Number of inoculations needed to infect the paint with bacteria | 6 | >8* | 5 | >8* | 1 | 1 |
| * the sample was not infected during the 8 inoculations. | | | | | | |

A composition of the invention was prepared comprising a poly (meth)acrylic binder, and 1,2-hexanediol. A comparative composition lacking 1,2-hexanediol was also prepared. The results in Table 11 show that the composition of the invention has resistance to bacterial growth in the wet state at pH 8.2 and in the presence of low concentrations of wet state preservatives. The comparative example fails the bacterial resistance test.

Table 11. Examples with poly (meth)acrylic binder.

| Ingredients (wt%) | Ex 15 | CE 28 |
|---|---|---|
| Polymer dispersion 2 | 25.5 | 25.5 |
| $TiO_2$ | 22.2 | 22.2 |
| Inorganic fillers | 19.2 | 19.2 |
| Opacifier | 5.6 | 5.6 |
| Wetting and dispersing agents | 1.0 | 1.0 |
| Foam control agents | 0.73 | 0.73 |
| Rheology modifiers | 1.6 | 1.6 |
| NaOH aq. (10 wt%) | 0.9 | 0.9 |
| Water | 22.3 | 23.3 |
| Diol 3 | 1.0 | 0 |
| **Total** | 100 | 100 |
| | | |
| **Paint properties** | | |
| pH | 8.2 | 8.2 |
| Density (kg/$dm^3$) | 1.44 | 1.44 |
| Calculated VOC (g/L) | 14 | < 1 |
| Vol % solids | 39.2 | 39.2 |
| Amount wet state preservatives (introduced from raw materials) (wt%) | 0.0067 BIT. 0.0017 DTBMA. 0.0009 CIT | 0.0067 BIT. 0.0017 DTBMA. 0.0009 CIT |
| **Microbiological test** | | |
| Number of inoculations needed to infect the paint with bacteria | >8* | 1 |
| * the sample was not infected during the 8 inoculations. | | |

Four compositions of the invention were prepared comprising 1,2-hexanediol, and with a pH pf 8.0, 9.0, 10.0 or 12.0 (Table 12). All of the compositions showed resistance to bacterial growth, with the composition at pH 8 performing best. Five comparative compositions were prepared which lacked any vicinal diol, but which had pHs of 7.0, 8.0, 9.0, 10.0

or 12.0 (Table 13). Another comparative composition was prepared which comprised 1.0 wt% 1,2-hexanediol, but at pH 7. None of the comparative compositions showed resistance to bacterial growth in the wet state, including the compositions with very high pH, and which according to the prior art should show resistance.

Table 12. Variation of pH.

| **Ingredients (wt%)** | **Ex 16** | **Ex 17** | **Ex 18** | **Ex 19** |
|---|---|---|---|---|
| Polymer dispersion 1 | 32.8 | 32.8 | 32.8 | 32.8 |
| $TiO_2$ | 20.8 | 20.8 | 20.8 | 20.8 |
| Inorganic fillers | 15.1 | 15.1 | 15.1 | 15.1 |
| Opacifier | 6.6 | 6.6 | 6.6 | 6.6 |
| Wetting and dispersing agents | 0.62 | 0.62 | 0.62 | 0.62 |
| Foam control agents | 0.43 | 0.43 | 0.43 | 0.43 |
| Rheology modifiers | 2.5 | 2.5 | 2.5 | 2.5 |
| NaOH aq. (10 wt%) | 1.2 | 1.6 | 2.2 | 4.5 |
| Water | 18.9 | 18.5 | 17.9 | 15.6 |
| Diol 3 | 1.0 | 1.0 | 1.0 | 1.0 |
| **Total** | **100** | **100** | **100** | **100** |
| | | | | |
| **Paint properties** | | | | |
| pH | 8.0 | 9.0 | 10.0 | 12.0 |
| Density(kg/$dm^3$) | 1.38 | 1.38 | 1.38 | 1.38 |
| Calculated VOC (g/L) | 14 | 14 | 14 | 14 |
| Vol % solids | 40.7 | 40.7 | 40.7 | 40.7 |
| Amount wet state preservatives (introduced from raw materials) (wt%) | <0.0001 | <0.0001 | <0.0001 | <0.0001 |
| **Microbiological test** | | | | |
| Number of inoculations needed to infect the paint with bacteria | 5 | 4 | 3 | 4 |

Table 13. Comparative examples - pH.

| **Ingredients (wt%)** | **CE 29** | **CE 30** | **CE 31** | **CE 32** | **CE 33** | **CE 34** |
|---|---|---|---|---|---|---|
| Polymer dispersion 1 | 32.8 | 32.8 | 32.8 | 32.8 | 32.8 | 32.8 |
| $TiO_2$ | 20.8 | 20.8 | 20.8 | 20.8 | 20.8 | 20.8 |
| Inorganic fillers | 15.1 | 15.1 | 15.1 | 15.1 | 15.1 | 15.1 |
| Opacifier | 6.6 | 6.6 | 6.6 | 6.6 | 6.6 | 6.6 |
| Wetting and dispersing agents | 0.62 | 0.62 | 0.62 | 0.62 | 0.62 | 0.62 |
| Foam control agents | 0.43 | 0.43 | 0.43 | 0.43 | 0.43 | 0.43 |
| Rheology modifiers | 2.5 | 2.5 | 2.5 | 2.5 | 2.5 | 2.5 |
| NaOH aq. (10 wt%) | | | 1.2 | 1.6 | 2.2 | 4.5 |
| Water | 20.1 | 21.1 | 19.9 | 19.5 | 18.9 | 16.6 |
| Diol 3 | 1.0 | | | | | |
| **Total** | **100** | **100** | **100** | **100** | **100** | **100** |
| | | | | | | |

(continued)

| Paint properties | | | | | | |
|---|---|---|---|---|---|---|
| pH | 7.0 | 7.0 | 8.0 | 9.0 | 10.0 | 12.0 |
| Density (kg/dm$^3$) | 1.38 | 1.38 | 1.38 | 1.38 | 1.38 | 1.38 |
| Calculated VOC (g/L) | 14 | < 1 | < 1 | < 1 | < 1 | < 1 |
| Vol % solids | 40.7 | 40.7 | 40.7 | 40.7 | 40.7 | 40.7 |
| Amount wet state preservatives (introduced from raw materials) (wt%) | <0.000 1 | <0.000 1 | <0.000 1 | <0.0001 | <0.000 1 | <0.000 1 |
| **Microbiological test** | | | | | | |
| Number of inoculations needed to infect the paint with bacteria | 1 | 1 | 1 | 1 | 1 | 1 |

**Claims**

**1.** An aqueous composition comprising:

(i) binder, preferably an organic binder;
(ii) >0.1 wt% $C_{5-9}$ acyclic, vicinal diol; and
(iii) water,

wherein said composition has a pH of >7.0 and said wt% is based on the total weight of the composition.

**2.** A composition as claimed in claim 1, wherein said organic binder is selected from poly (meth)acrylic, poly styrene (meth)acrylic, poly(ethylene-vinyl acetate), poly vinyl acetate (meth)acrylic, alkyd, polyester, polyurethane, alkyd modified polyurethane, (meth)acrylic modified polyurethane, urethane modified alkyd, (meth)acrylic modified alkyd, alkyd modified poly (meth)acrylic, polycarbonate and combinations thereof, and more preferably poly (meth)acrylic, poly styrene (meth)acrylic, poly(ethylene-vinyl acetate), poly vinyl acetate (meth)acrylic, and combinations thereof.

**3.** A composition as claimed in claim 1 or 2, wherein said vicinal diol is a $C_{6-9}$ acyclic, vicinal diol, more preferably a $C_{6-8}$ acyclic, vicinal diol, still more preferably a $C_6$, $C_7$ or $C_8$ acyclic, vicinal diol, and especially preferably a $C_6$ or $C_7$ acyclic, vicinal diol.

**4.** A composition as claimed in any preceding claim, wherein said vicinal diol is a linear diol and/or a 1,2 acyclic, vicinal diol.

**5.** A composition as claimed in any preceding claim, comprising 0.25-2.00 wt%, preferably 0.30 to <2.00 wt%, more preferably 0.40-1.50 wt%, and still more preferably 0.50-1.20 wt% vicinal diol, based on the total weight of the composition.

**6.** A composition as claimed in any preceding claim, having a pH of 7.5-12.0, preferably 8.0-12.0, more preferably 8.0-11.0, and still more preferably 8.0 to <9.0.

**7.** A composition as claimed in any preceding claim, comprising one or more (iv) pH modifier; (v) wetting and/or dispersing agent; (vi) foam control agent; (vii) colour pigment; (viii) filler; (ix) rheology modifier; (x) wet-state preservative; and/or (xi) dry-film preservative.

**8.** A composition as claimed in any preceding claim, comprising:

(i) 5-80 wt% binder selected from poly (meth)acrylic, poly styrene (meth)acrylic, poly(ethylene-vinyl acetate), poly vinyl acetate (meth)acrylic, alkyd, polyester, polyurethane, alkyd modified polyurethane, (meth)acrylic modified polyurethane, urethane modified alkyd, (meth)acrylic modified alkyd, alkyd modified poly (meth)acrylic, polycarbonate and combinations thereof, and preferably poly (meth)acrylic, poly styrene (meth)acrylic, poly(ethylene-vinyl acetate), poly vinyl acetate (meth)acrylic, and combinations thereof;

(ii) >0.1 wt% $C_{5-9}$ acyclic, vicinal diol;
(iii) water,
(iv) pH modifier; and
(x) wet-state preservative and/or (xi) dry film preservative,

wherein said composition has a pH of >7.0 and said wt% is based on the total weight of the composition.

**9.** A composition as claimed in any preceding claim, which is a coating composition (such as paint, primer, varnish, stain and lacquer), putty, plaster, sealant, emulsion or dispersion, more preferably a coating composition.

**10.** A method for making an aqueous composition as claimed in any one of claims 1 to 9, comprising mixing binder, >0.1 wt% $C_{5-9}$ acyclic, vicinal diol and water.

**11.** Use of a $C_{5-9}$ acyclic, vicinal diol as an agent to improve the microbial resistance in an aqueous composition comprising a binder, wherein said $C_{5-9}$ acyclic, vicinal diol has a concentration of >0.1 wt%, based on the total weight of the composition, and said composition has a pH of >7.0.

**12.** Use of an aqueous composition as claimed in any one of claims 1 to 9 to form a coating on a substrate.

**13.** A method of coating a substrate comprising:

(i) applying an aqueous composition as claimed in any one of claims 1 to 9 to at least one surface of the substrate; and
(ii) drying and/or curing said composition to form said coating.

**14.** A coating on a substrate, wherein said coating is formed from an aqueous composition as claimed in any one of claims 1 to 9.

**15.** A coated substrate, wherein said coating is formed from an aqueous composition as claimed in any one of claims 1 to 9.

Europäisches Patentamt
European Patent Office
Office européen des brevets

# EUROPEAN SEARCH REPORT

Application Number
EP 23 19 9234

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 868 843 A1 (MITSUBISHI PENCIL CO [JP]) 25 August 2021 (2021-08-25) * paragraphs [0048], [0052] - [0072]; claims 1, 2; examples 1-8, 11-18; tables 1, 2 * | 1-15 | INV. C09D5/02 C09D5/14 C09D7/63 |
| X | EP 1 564 266 A1 (HEWLETT PACKARD DEVELOPMENT CO [US]) 17 August 2005 (2005-08-17) * paragraphs [0039] - [0041]; claims 1-10 * | 1-10, 12-15 | |
| X | US 2003/105186 A1 (SUTHAR AJAY KANUBHAI [US] ET AL) 5 June 2003 (2003-06-05) * paragraphs [0033] - [0035]; claims 1-52; examples 3, 4; tables 1-4 * | 1-10, 12-15 | |
| X | US 2004/229974 A1 (MIYABAYASHI TOSHIYUKI [JP]) 18 November 2004 (2004-11-18) * paragraphs [0364], [0365], [0483] - [0496]; examples 26-30; table 4 * | 1-10, 12-15 | TECHNICAL FIELDS SEARCHED (IPC) |
| X | US 2004/030001 A1 (MA ZEYING [US] ET AL) 12 February 2004 (2004-02-12) * claims 1, 2; examples 1, 2; tables 1, 2 * | 1-10, 12-15 | C09D C08K |
| A | US 2019/071575 A1 (BAUM RÜDIGER [DE] ET AL) 7 March 2019 (2019-03-07) * paragraphs [0002], [0017], [0038], [0039], [0043], [0064] - [0066], [0084] - [0097]; claims 1-3, 9 * | 1-15 | |
| A | US 2009/123397 A1 (SEAL KEN [GB] ET AL) 14 May 2009 (2009-05-14) * claims 16-28 * | 1-15 | |

The present search report has been drawn up for all claims

2

| Place of search | Date of completion of the search | Examiner |
|---|---|---|
| Munich | 8 February 2024 | Schmitt, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 19 9234

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2024

| Patent document cited in search report | Publication date | Patent family member(s) | Publication date |
|---|---|---|---|
| EP 3868843 A1 | 25-08-2021 | CN 112867769 A | 28-05-2021 |
| | | EP 3868843 A1 | 25-08-2021 |
| | | JP 2020063363 A | 23-04-2020 |
| | | KR 20210078519 A | 28-06-2021 |
| | | US 2021371686 A1 | 02-12-2021 |
| | | WO 2020080392 A1 | 23-04-2020 |
| EP 1564266 A1 | 17-08-2005 | DE 602005002377 T2 | 05-06-2008 |
| | | EP 1564266 A1 | 17-08-2005 |
| | | JP 4521292 B2 | 11-08-2010 |
| | | JP 2005226073 A | 25-08-2005 |
| | | US 2005176848 A1 | 11-08-2005 |
| US 2003105186 A1 | 05-06-2003 | AU 2002359411 A1 | 17-06-2003 |
| | | TW 200303908 A | 16-09-2003 |
| | | US 2003105186 A1 | 05-06-2003 |
| | | WO 03048248 A1 | 12-06-2003 |
| US 2004229974 A1 | 18-11-2004 | JP 4547885 B2 | 22-09-2010 |
| | | JP 2005097476 A | 14-04-2005 |
| | | US 2004229974 A1 | 18-11-2004 |
| US 2004030001 A1 | 12-02-2004 | EP 1400575 A1 | 24-03-2004 |
| | | JP 2004059933 A | 26-02-2004 |
| | | US 2004030001 A1 | 12-02-2004 |
| US 2019071575 A1 | 07-03-2019 | CN 108738297 A | 02-11-2018 |
| | | EP 3422854 A1 | 09-01-2019 |
| | | US 2019071575 A1 | 07-03-2019 |
| | | WO 2017148572 A1 | 08-09-2017 |
| US 2009123397 A1 | 14-05-2009 | EP 1906734 A1 | 09-04-2008 |
| | | EP 2000122 A2 | 10-12-2008 |
| | | US 2009123397 A1 | 14-05-2009 |
| | | WO 2007007080 A1 | 18-01-2007 |

EPO FORM P0459

For more details about this annex : see Official Journal of the European Patent Office, No. 12/82